# EUROPEAN PATENT SPECIFICATION

(11) **EP 4 162 556 B1**
(45) Date of publication and mention of the grant of the patent: **02.12.2026**
(21) Application number: 21817645.1
(22) Date of filing: 03.06.2021
(51) Int. Cl.: H01M 10/0525, H01M 4/136, H01M 4/58, H01M 4/60

(54) **POROUS CATHODES FOR SECONDARY BATTERIES**
PORÖSE KATHODEN FÜR SEKUNDÄRBATTERIEN
CATHODES POREUSES POUR BATTERIES SECONDAIRES

(30) Priority: 04.06.2020 US 202063034916 P
(43) Date of publication of application: 12.04.2023
(73) Proprietor: Conamix Inc., Ithaca, NY 14850 (US)
(72) Inventor: BECK, Larry, Ithaca, New York 14850 (US)
(74) Representative: Casalonga
(86) International application number: PCT/US2021/035713
(87) International publication number: WO 2021/247871

(56) References cited:
- WO-A1-2020/017580
- CN-B- 102 903 887
- US-A1- 2018 190 973
- US-A1- 2019 027 793
- QUAN PANG ET AL: "A Comprehensive Approach toward Stable Lithium-Sulfur Batteries with High Volumetric Energy Density", ADVANCED ENERGY MATERIALS, vol. 7, no. 6, 18 November 2016 (2016-11-18), pages 1601630, XP055430378, ISSN: 1614-6832, DOI: 10.1002/aenm.201601630

## Description

### TECHNICAL FIELD

This application relates to cathode composites for secondary sulfur batteries.

### BACKGROUND

A major objective in the commercial development of next generation rechargeable batteries is to provide batteries with higher energy densities and lower cost than state of the art lithium ion batteries. One of the most promising approaches towards achieving this goal is the use of a sulfur cathode coupled with a lithium metal anode. Sulfur is inexpensive, abundant, and offers a theoretical energy capacity that is an order of magnitude higher than conventional metal oxide-based intercalation cathodes used in current lithium ion cells. Similarly, anodes based on metallic lithium have a substantially higher energy density than the lithium graphite anodes used in current lithium ion cells.

However, the manufacture of a practical secondary sulfur battery has been an elusive goal. Among the numerous challenges that plague sulfur cathodes, one of the most serious arises from the requirements of multi-step conversion of S₈ to Li₂S. While both sulfur and lithium sulfide are highly insoluble, their interconversion proceeds via intermediate lithium polysulfides, Li₂Sₓ which are highly soluble. In a typical sulfur battery containing a liquid electrolyte (which typically consists of liquid ethers or sulfones), formation and interconversion of lithium polysulfides takes place in solution phase. Until recently, most literature pertaining to sulfur batteries has reported electrochemical performance of sulfur cathodes in the presence of a large volume of electrolyte (e.g. >10 µL of electrolyte per mg of active sulfur). Such excess of electrolyte improves kinetics of sulfur conversion and is therefore beneficial for charge/discharge rates and sulfur utilization of such batteries. In many cases, kinetics and accessibility of sulfur are further improved by utilizing low areal sulfur loadings in a cathode composition-loadings of about 1 mg S/cm² are common.

Quan Pang ET AL, Advanced Energy Materials, vol. 7, no. 6, 18 November 2016 (2016-11-18), page 1601630, XP055430378, discloses a comprehensive approach toward stable lithium-sulfur batteries with high volumetric energy density. US 2019/027793 discloses positive electrodes for lithium batteries, particularly lithium sulfur batteries, and the manufacture thereof.

### SUMMARY

As a result of low areal loading of sulfur and high electrolyte ratios in many literature reports, advantages of sulfur's high theoretical energy capacity are severely eroded, such that Wh/Kg or Wh/L capacities of resulting sulfur batteries at a cell level are often inferior to state-of-the-art lithium ion batteries.

There remains a need to address such issues to enable manufacture of practical sulfur batteries that have high gravimetric energy density, and which are simultaneously able to deliver discharge rates and cycle life capacities sufficient to serve critical applications, such as electric vehicles. The present disclosure addresses these and related challenges.

The present invention relates to a secondary sulfur battery as defined in the claims.

Also disclosed herein is the manufacture of sulfur cathode compositions with particular physical properties, which combine to produce unexpected and highly desirable electrochemical properties. Provided cathode compositions combine specific values of composite density, porosity, thickness, and areal sulfur loading that enable construction of practical sulfur batteries with high gravimetric energy density, good rate capability, and long cycle life.

In one aspect, the present disclosure encompasses the recognition that, contrary to expectations, it is beneficial to create a porous cathode composite that combines the features of: 1) a thick cathode layer within a thickness range of between about 75 µm and about 170 µm; 2) a low cathode layer density within a specific tailored range further defined herein; 3) a high porosity (for example, a porosity of about equal to or greater than 50 vol%); and 4) electroactive sulfur present at a modest content that is maintained about equal to or less than 70 wt% sulfur relative to the total weight of solids in the cathode composite. The beneficial combination of a thick cathode layer and relatively low sulfur content is unexpected given the preponderance of prior art and effort directed to increasing the weight percentage of sulfur in cathode compositions and the preference for use of thin cathode coatings.

In certain embodiments, a provided porous composite is characterized in that it has a porosity between about 40% and about 80%; a thickness between about 75 µm and about 170 µm; a %Swt between about 40 and about 70; and a ρ_{theoretical} between about 1.38 and about 1.60 g/cm³.

Also disclosed herein is a sulfur cathode (e.g., for use in a secondary battery), the cathode comprising a porous composite material that: a) has a thickness of at least about 75 µm, and b) is composed of a solid having a density less than about 1.6 g/cm³, wherein the cathode contains less than about 2 to about 10 mg/cm² electroactive sulfur. In some embodiments, a sulfur cathode (e.g., for use in a secondary battery), comprises a porous composite material that: a) has a thickness of at least about 75 µm, and b) is composed of a solid having a density less than about 1.6 g/cm³, wherein the cathode contains less than about 2 to about 6 mg/cm² electroactive sulfur. In some embodiments, a sulfur cathode (e.g., for use in a secondary battery), comprises a porous composite material that: a) has a thickness of at least about 75 µm, and b) is composed of a solid having a density less than about 1.6 g/cm³, wherein the cathode contains less than about 4 to about 10 mg/cm² electroactive sulfur.

Disclosed herein are porous cathode compositions containing electrolyte within the pores of the composite, characterized in that at least about 2/3 of the pore volume is occupied by electrolyte. In certain embodiments, such compositions are characterized in that at least about 75%, at least about 80%, at least about 85%, at least about 90%, or at least about 95% of the pore volume is occupied by electrolyte. In certain embodiments, essentially all of the pore volume in the cathode composition is occupied by electrolyte.

In certain embodiments, such cathode compositions contain an electrolyte comprising a liquid selected from the group consisting of organocarbonates, ethers, amines, sulfones, water, alcohols, fluorocarbons, or combinations of any of these. In certain embodiments, an electrolyte comprises a liquid selected from the group consisting of dimethoxyethane (DME), 1,3-dioxolane (DOL), and combinations thereof. In certain embodiments, an electrolyte comprises a liquid selected from the group consisting of sulfolane, sulfolene, dimethyl sulfone, or methyl ethyl sulfone. In certain embodiments, an electrolyte comprises a liquid selected from the group consisting of ethylene carbonate, propylene carbonate, dimethyl carbonate, diethyl carbonate and methylethyl carbonate.

In certain embodiments, such cathode compositions contain an electrolyte comprising alkali metal salts. In certain embodiments such salts comprise lithium salts, such as LiCF₃SO₃, LiClO₄, LiNO₃, LiBr, LiPF₆, LiTDI, LiFSI, and LiTFSI, or combinations thereof. In certain embodiments, cathode compositions contain an electrolyte comprising ionic liquids, such as 1-ethyl-3-methylimidzaolium-TFSI, *N*-butyl-*N*-methyl-piperidinium-TFSI , *N*-methyl-*n*-butyl pyrrolidinium-TFSI, and *N*-methyl-*N*-propylpiperidinium-TFSI, or combinations thereof. In certain embodiments, such cathode compositions contain an electrolyte comprising superionic conductors, such as sulfides, oxides, and phosphates, for example, phosphorous pentasulfide, or combinations thereof.

In one aspect, the present invention provides a secondary sulfur battery comprising: a cathode comprising a porous cathode composite, the composite containing between about 30 and about 70 weight percent electroactive sulfur; and an electrolyte in contact with the porous cathode composition; characterized in that: the battery has a ratio of electrolyte to electroactive sulfur about equal to or less than 3.5 microliters of electrolyte per milligram of electroactive sulfur; the cathode comprises between about 6 milligrams and about 10 milligrams of porous cathode composite per square centimeter; and the cathode composite has a thickness between about 75 and about 170 µm.

### DEFINITIONS

In order for the present disclosure to be more readily understood, certain terms are first defined below. Additional definitions for the following terms and other terms are set forth throughout the specification.

In this application, unless otherwise clear from context, the term "a" may be understood to mean "at least one." As used in this application, the term "or" may be understood to mean "and/or." In this application, the terms "comprising" and "including" may be understood to encompass itemized components or steps whether presented by themselves or together with one or more additional components or steps. As used in this application, the term "comprise" and variations of the term, such as "comprising" and "comprises," are not intended to exclude other additives, components, integers or steps.

***About, Approximately:*** As used herein, the terms "about" and "approximately" are used as equivalents. Unless otherwise stated, the terms "about" and "approximately" may be understood to permit standard variation as would be understood by those of ordinary skill in the art. Where ranges are provided herein, the endpoints are included. Any numerals used in this application with or without about/approximately are meant to cover any normal fluctuations appreciated by one of ordinary skill in the relevant art. In some embodiments, the term "approximately" or "about" refers to a range of values that fall within 25%, 20%, 19%, 18%, 17%, 16%, 15%, 14%, 13%, 12%, 11%, 10%, 9%, 8%, 7%, 6%, 5%, 4%, 3%, 2%, 1%, or less in either direction (greater than or less than) of the stated reference value unless otherwise stated or otherwise evident from the context (except where such number would exceed 100% of a possible value).

***Density:*** As used herein, the term "density" generally refers to a quantitative measure of mass of a material divided by its geometric volume. For example, density of a porous composite can be calculated by dividing mass of such composite material by its geometric volume, or the thickness of such composite multiplied by its area. In some embodiments, theoretical density of a porous composite represents a summation of weighted densities for each component in a composite material; in some embodiments a theoretical density represents density of a composite material, which has no void space.

***Electroactive Sulfur:*** As used herein, the term "electroactive sulfur" refers to a sulfur that changes its oxidation state, or partakes in a formation or breaking of chemical bonds, in a charge-transfer step of an electrochemical reaction.

***Nanoparticle, Nanostructure, Nanomaterial:*** As used herein, these terms may be used interchangeably to denote a particle of nanoscale dimensions or a material having nanoscale structures. Nanoparticles can have essentially any shape or configuration, such as a tube, a wire, a laminate, sheets, lattices, a box, a core and shell, or combinations thereof.

***Polymer:*** As used herein, the term "polymer" generally refers to a substance that has a molecular structure consisting chiefly or entirely of repeated sub-units bonded together, such as synthetic organic materials used as plastics and resins.

***Porosity:*** As used herein, the term "porosity" generally refers to a quantitative measure of void space in a material. For example, in certain embodiments, a porosity of a cathode composite is a measure of volume fraction of pores in a composite relative to a total cathode composite (cm³ pores/cm³). In certain embodiments, porosity of a composite is calculated as the complement to a fractional density of said composite relative to its theoretical density.

***Substantially:*** As used herein, the term "substantially" refers to a qualitative condition of exhibiting total or near-total extent or degree of a characteristic or property of interest.

### BRIEF DESCRIPTION OF THE DRAWINGS

In the drawings, like reference characters generally refer to the same parts throughout the different views. Also, the drawings are not necessarily to scale, emphasis instead generally being placed upon illustrating the principles of the disclosed compositions and methods and are not intended as limiting. For purposes of clarity, not every component may be labeled in every drawing. In the following description, various embodiments are described with reference to the following drawings, in which:
FIG. 1 is a pictorial representation of a cross section of an electrochemical cell according to certain embodiments of the present disclosure.
FIG. 2 is a pictorial representation of a cylindrical battery according to certain embodiments of the present disclosure.

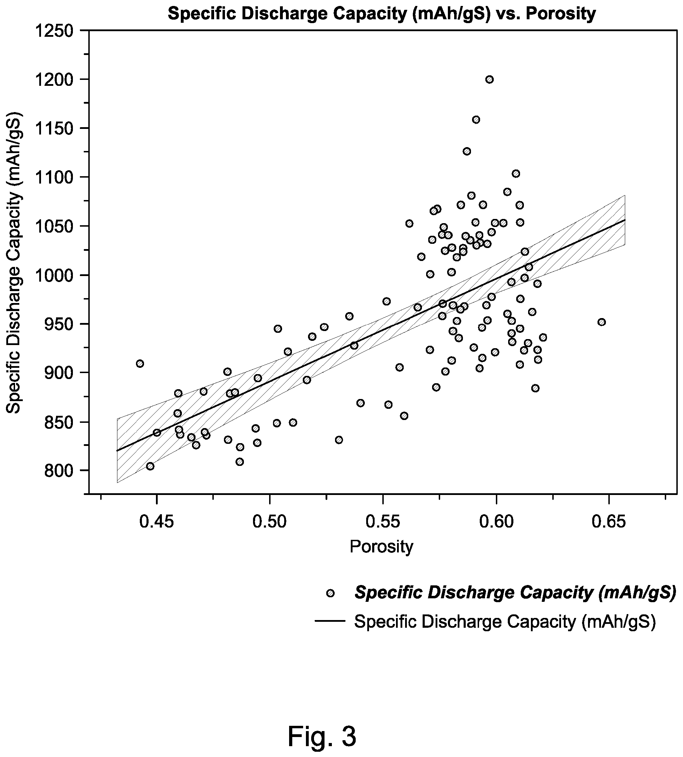

FIG. 3 is a graphical representation of specific discharge capacity of porous composites as a function of porosity according to certain embodiments of the present disclosure.

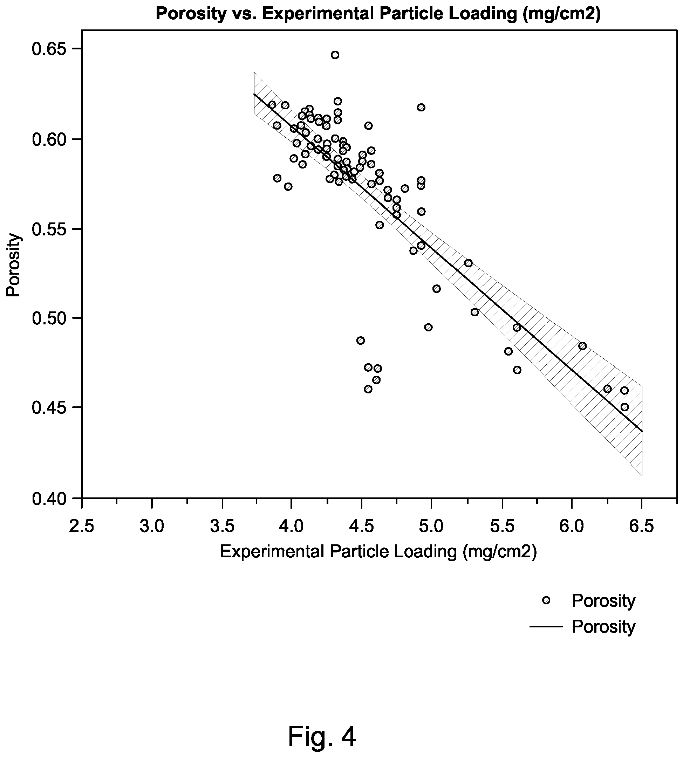

FIG. 4 is graphical representation of porosity of porous composites as a function of active material loading according to certain embodiments of the present disclosure.

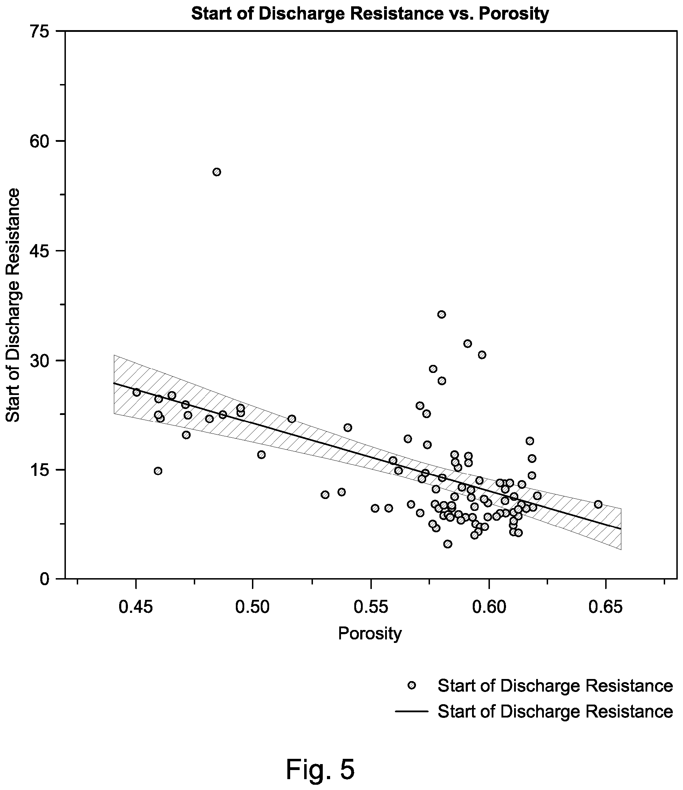

FIG. 5 is a graphical representation of discharge resistance of porous composites as a function of porosity according to certain embodiments of the present disclosure.

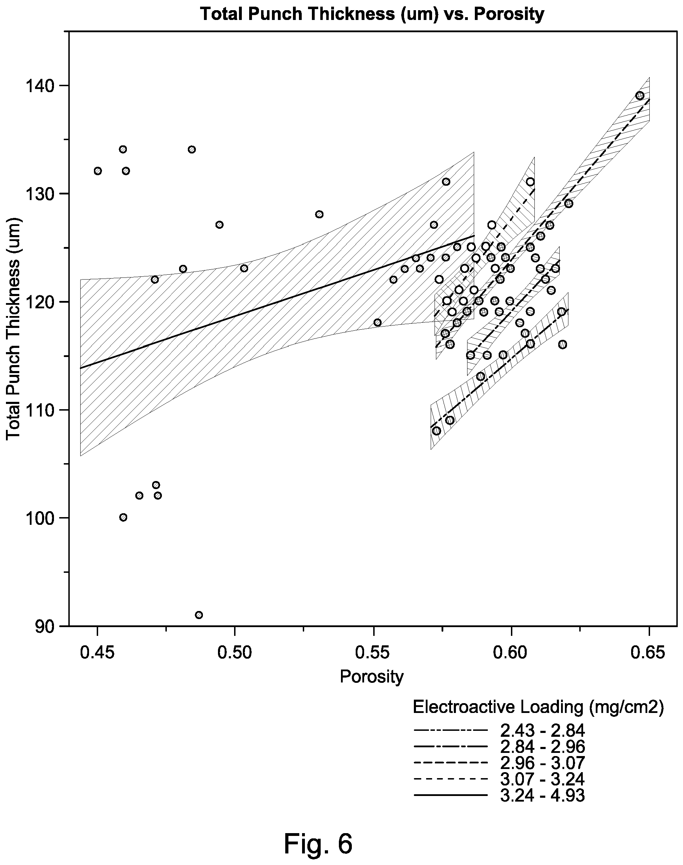

FIG. 6 is a graphical representation of thickness of porous composites as a function of porosity according to certain embodiments of the present disclosure.

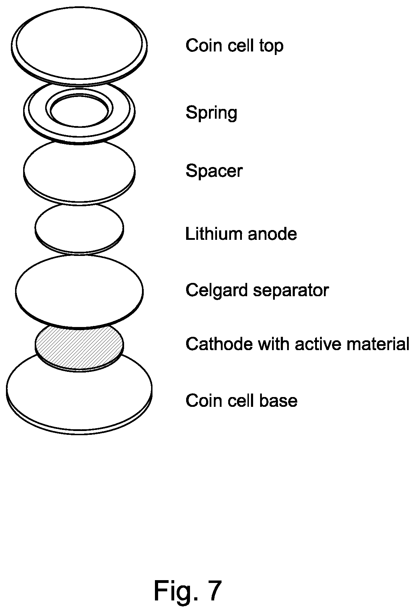

FIG. 7 is a pictorial representation of a coin cell assembly according to one or more embodiments of the disclosure.

### DETAILED DESCRIPTION

The present invention relates to a secondary sulfur battery as defined in the claims.

Generally, the present disclosure is directed to novel porous cathode materials for use in secondary sulfur batteries and related methods for fabricating and using such devices. In certain embodiments, a provided porous composite combines features of: 1) a thick cathode layer within a thickness range of between about 75 µm and about 170 µm; 2) a low cathode layer density within a specific tailored range further defined below; 3) a high porosity (for example, a porosity of about equal to or greater than about 50%); and 4) electroactive sulfur present at a modest content that is maintained between about 30 wt% to about 70 wt% sulfur relative to the total weight of solids in such a cathode composite. In certain embodiments, a porous composite described herein is used to prepare a cathode for use in secondary sulfur batteries. Without wishing to be bound by any particular theory, it is possible that combination of a thick cathode layer and relatively low sulfur content in a porous cathode material for a secondary sulfur battery described herein produces improved electrochemical performance of said battery.

### A. Porous Composites

Among other things, the present disclosure is directed to porous composites suitable for use as cathodes and for formulation of cathode compositions of secondary sulfur batteries. Provided porous composites combine specific values of composite density, porosity, thickness, and areal sulfur to construct cathode materials which, when used in secondary sulfur batteries, exhibit high gravimetric energy density, good rate capability, and long cycle life. For example, in certain embodiments, such composites have a unique combination of sulfur content, density, and porosity.

In certain embodiments, a porous composite of the present disclosure combines features of: 1) a thick cathode layer within a thickness range of between about 75 µm and about 170 µm; 2) a low cathode layer density within a specific tailored range further defined below; 3) a high porosity (for example, a porosity of about equal to or greater than about 50%); and 4) electroactive sulfur present at a modest content that is maintained between about 30 wt% and about 70 wt% sulfur relative to the total weight of solids in the cathode composite.

In certain embodiments, a porous composite of the present disclosure is defined in terms of its physical characteristics, for example, porosity, density, and sulfur-loading.

In some embodiments, porosity of a composite cathode film is defined as: $P% = \left(1-\frac{{ρ}_{bulk}}{{ρ}_{theortical}}\right) ⋅ 100 %$ where ρ_{bulk} is the mass of a cathode divided by its geometric volume (e.g. thickness × area), and ρ_{theoretical} is the sum of the weighted theoretical (or atomic) densities of each component in a composite electrode.

Sulfur content, which is correlated to potential storage capacity of a cathode composite, can be quantified in terms of sulfur mass fraction (%Swt) and area specific sulfur loading (*Sₐᵣₑₐ*). In certain embodiments, sulfur mass fraction of a composite cathode film is sulfur mass in a composite divided by total composite mass. In some embodiments, area specific sulfur loading (*Sₐᵣₑₐ*) is calculated as a sulfur mass fraction multiplied by mass of a cathode film, divided by cathode surface area.

In certain embodiments, composites of the present disclosure have a value *P%* of greater than about 40. In certain embodiments, such composites have a value of P% greater than about 50, greater than about 55, greater than about 60, greater than about 65, greater than about 70, or greater than about 75. In certain embodiments, *P%* is between about 40 and about 70. In certain embodiments, *P%* is between about 50 and about 70. In certain embodiments, *P%* is between about 60 and about 80, between about 60 and about 70, between about 65 and about 75, or between about 70 and about 80.

In certain embodiments, provided composites are characterized in that they have a value ρ_{bulk} between about 0.45 and about 0.85 g/cm³. In certain embodiments, the value of ρ_{bulk} is between about 0.45 and about 0.65 g/cm³, between about 0.50 and about 0.70 g/cm³, between about 0.55 and about 0.75 g/cm³, between about 0.60 and about 0.80 g/cm³, or between about 0.65 and about 0.85 g/cm³.

In certain embodiments, provided composites are characterized in that the value of ρ_{theoretical} is between about 1.25 and about 1.75 g/cm³. In certain embodiments, the value of ρ_{theoretical} is between about 1.30 and about 1.60 g/cm³, between about 1.35 and about 1.65 g/cm³, between about 1.40 and about 1.60 g/cm³, between about 1.45 and about 1.65 g/cm³, or between about 1.38 and about 1.57 g/cm³.

In certain embodiments, provided composites are characterized in that they have a thickness between about 75 and about 170 µm. In certain embodiments, provided composites are characterized in that they have a thickness between about 80 and about 150 µm. In certain embodiments, such composites have a thickness between about 80 and about 100 µm, between about 85 and about 125 µm, between about 90 and about 110 µm, between about 100 and about 120 µm, between about 110 and about 130 µm, between about 120 and about 140 µm, or between about 125 and about 150 µm.

In certain embodiments, provided composites are characterized in that the value of %Swt is between about 30 and about 70. In certain embodiments, such composites are further characterized in that the value of %Swt is between about 30 and about 60. In certain embodiments, the value of %Swt is between about 30 and about 50, between about 40 and about 60, between about 50 and about 60, or between about 40 and about 50. In certain embodiments, the value of %Swt is about 30, about 35, about 40, about 45, about 50, about 55, or about 60.

In certain embodiments, provided composites are characterized in that the value of S*ₐᵣₑₐ* is between about 1.85 and about 4.15 mg/cm². In certain embodiments, the value of S*ₐᵣₑₐ* is between about 1.85 and about 3.35 mg/cm², between about 1.85 and about 2.85 mg/cm², between about 2.50 and about 4.15 mg/cm², or between about 2.80 and about 3.20 mg/cm². In certain embodiments, the value of S*ₐᵣₑₐ* is about 1.90 mg/cm², about 2.15 mg/cm², about 2.35 mg/cm², about 2.45 mg/cm², about 2.50 mg/cm², about 2.60 mg/cm², about 2.75 mg/cm², about 2.85 mg/cm², about 3.05 mg/cm², about 3.15 mg/cm², about 3.20 mg/cm², about 3.45 mg/cm², about 3.50 mg/cm², about 3.75 mg/cm², about 3.80 mg/cm², or about 4.10 mg/cm².

In certain embodiments, provided composites are characterized in that the value of S*ₐᵣₑₐ* is between about 4 and about 10 mg/cm². In certain embodiments, the value of S*ₐᵣₑₐ* is between about 4 and about 5 mg/cm², between about 4.5 and about 6 mg/cm², between about 5 and about 7.5 mg/cm², or between about 6 and about 8 mg/cm². In certain embodiments, the value of S*ₐᵣₑₐ* is about 5 mg/cm², about 5.5 mg/cm², about 6 mg/cm², about 6.5 mg/cm², about 7 mg/cm², about 8 mg/cm², about 9 mg/cm², or about 10 mg/cm².

In certain embodiments, a provided porous composite **C1** is characterized in that it:
has a porosity between about 50% and about 60%,
has a thickness between about 85 µm and about 115 µm,
has a %Swt between about 40 and about 60, and
the solid material comprising the porous composite has a ρ_{theoretical} between about 1.38 and about 1.58 g/cm³.

In certain embodiments, a provided porous composite **C1** is characterized in that the composite has a %Swt of about 40, and a ρ_{theoretical} of about 1.38 ⁺/₋ 0.05 g/cm³. In certain embodiments, a composite **C1 is** characterized in that the composite has a %Swt of about 45, and a ρ_{theoretical} of about 1.44 ⁺/₋ 0.05 g/cm³. In certain embodiments, a composite **C1 is** characterized in that the composite has a %Swt of about 50, and a ρ_{theoretical} of about 1.48 ⁺/₋ 0.05 g/cm³. In certain embodiments, a composite **C1 is** characterized in that the composite has a %Swt of about 55, and a ρ_{theoretical} of about 1.53 ⁺/₋ 0.05 g/cm³. In certain embodiments, a composite **C1** is characterized in that the composite has a %Swt of about 60, and a ρ_{theoretical} of about 1.57 ⁺/₋ 0.05 g/cm³.

In certain embodiments, a composite **C1 is** characterized in that the composite has a %Swt of about 40, and a thickness between about 85 and about 115 µm. In certain embodiments, a composite **C1 is** characterized in that the composite has a %Swt of about 45, and a thickness between about 90 and about 110 µm. In certain embodiments, a composite **C1** is characterized in that the composite has a %Swt of about 50, and a thickness between about 95 and about 110 µm. In certain embodiments, a composite **C1** is characterized in that the composite has a %Swt of about 55, and a thickness between about 100 and about 110 µm. In certain embodiments, a composite **C1 is** characterized in that the composite has a %Swt of about 60, and a thickness between about 100 and about 110 µm.

In certain embodiments, a composite **C1 is** characterized in that the composite has a %Swt of about 50, ρ_{theoretical} between about 1.45 and about 1.50 g/cm³, and a thickness between about 95 and about 110 µm. In certain embodiments, a composite **C1 is** characterized in that the composite has a %Swt of about 60, ρ_{theoretical} between about 1.55 and about 1.60 g/cm³, and a thickness between about 100 and about 110 µm.

In certain embodiments, a composite **C1** is characterized in that the composite contains between about 2 and about 10 mg of cathode composite per cm² of cathode area. In certain embodiments, a composite **C1** is characterized in that the composite contains between about 3 and about 7 mg of cathode composite per cm² of cathode area. In certain embodiments, a composite **C1** is characterized in that the composite contains between about 4 and about 10 mg of cathode composite per cm² of cathode area. In certain embodiments, the composite **C1** is characterized in that the composite contains about 6 mg of composite per cm² of cathode area. In certain embodiments, the composite **C1** is characterized in that the composite contains between about 7 and about 10 mg of composite per cm² of cathode area. In certain embodiments, the composite **C1** is characterized in that the composite contains about 7 mg, about 8 mg, about 9 mg, or about 10 mg of composite per cm² of cathode area.

In certain embodiments, a provided porous composite **C2** is characterized in that it:
has a porosity between about 50% and about 60%,
has a thickness between about 75 µm and about 165 µm,
has a %Swt between about 40 and about 65, and
the solid material comprising the porous composite has a ρ_{theoretical} between about 1.38 and about 1.60 g/cm³.

In certain embodiments, a provided composite **C2** is characterized in that:
the porous composite has a porosity between about 50% and about 60%,
the porous composite has a thickness between about 100 µm and about 140 µm,
the porous composite has a %Swt between about 40 and about 65, and
the solid material comprising the porous composite has a ρ_{theoretical} between about 1.38 and about 1.60 g/cm³.

In certain embodiments, a composite **C2** is characterized in that the composite has a %Swt of about 40, and a ρ_{theoretical} of about 1.38 ⁺/₋ 0.05 g/cm³. In certain embodiments, a composite **C2** is characterized in that the composite has a %Swt of about 45, and a ρ_{theoretical} of about 1.44 ⁺/₋ 0.05 g/cm³. In certain embodiments, a composite **C2** is characterized in that the composite has a %Swt of about 50, and a ρ_{theoretical} of about 1.48 ⁺/₋ 0.05 g/cm³. In certain embodiments, a composite **C2** is characterized in that the composite has a %Swt of about 55, and a ρ_{theoretical} of about 1.53 ⁺/₋ 0.05 g/cm³. In certain embodiments, a composite **C2** is characterized in that the composite has a %Swt of about 60, and a ρ_{theoretical} of about 1.57 ⁺/₋ 0.05 g/cm³. In certain embodiments, a composite **C2** is characterized in that the composite has a %Swt of about 65, and a ρ_{theoretical} of about 1.60 ⁺/₋ 0.05 g/cm³.

In certain embodiments, a composite **C2** is characterized in that the composite has a %Swt of about 40, and a thickness between about 105 and about 165 µm. In certain embodiments, a composite **C2** is characterized in that the composite has a %Swt of about 45, and a thickness between about 100 and about 160 µm. In certain embodiments, a composite **C2** is characterized in that the composite has a %Swt of about 50, and a thickness between about 105 and about 155 µm. In certain embodiments, a composite **C2** is characterized in that the composite has a %Swt of about 50, and a thickness between about 105 and about 140 µm. In certain embodiments, a composite **C2** is characterized in that the composite has a %Swt of about 55, and a thickness between about 110 and about 140 µm. In certain embodiments, a composite **C2** is characterized in that the composite has a %Swt of about 55, and a thickness between about 110 and about 135 µm. In certain embodiments, a composite **C2** is characterized in that the composite has a %Swt of about 60, and a thickness between about 115 and about 145 µm.

In certain embodiments, a composite **C2** is characterized in that the composite has a %Swt of about 40, ρ_{theoretical} between about 1.35 and about 1.40 g/cm³, and a thickness between about 100 and about 150 µm. In certain embodiments, a composite **C2** is characterized in that the composite has a %Swt of about 50, ρ_{theoretical} between about 1.45 and about 1.50 g/cm³, and a thickness between about 105 and about 140 µm. In certain embodiments, a composite **C2** is characterized in that the composite has a %Swt of about 60, ρ_{theoretical} between about 1.55 and about 1.60 g/cm³, and a thickness between about 115 and about 145 µm.

In certain embodiments, a composite **C2** is characterized in that the composite contains between about 2 and about 10 mg of cathode composite per cm² of cathode area. In certain embodiments, a composite **C2** is characterized in that the composite contains between about 3 and about 7 mg of cathode composite per cm² of cathode area. In certain embodiments, a composite **C2** is characterized in that the composite contains between about 6 mg and about 10 mg of composite per cm² of cathode area. In certain embodiments, a composite **C2** is characterized in that the composite contains between about 7 mg and about 10 mg of composite per cm² of cathode area. In certain embodiments, a composite **C2** is characterized in that the composite contains about 7 mg, about 8 mg, about 9mg, or about 10 mg of composite per cm² of cathode area.

In certain embodiments, a provided composite is characterized in that it:
has a porosity between about 50% and about 60%,
has a thickness of between about 100 µm and about 170 µm,
has a %Swt between about 30 and about 60, and
the solid material comprising the porous composite has a ρ_{theoretical} between about 1.38 and about 1.58 g/cm³.

To be applicable as a sulfur cathode composition, composites described herein must comprise sulfur that it is in a form capable of undergoing electrochemical redox reactions. The present disclosure places no specific limitations on the identity of such electroactive sulfur. In fact, in some embodiments, the identity of electroactive sulfur species in provided compositions changes. For example, if a provided composite is present in an electrochemical cell, the identity of sulfur species may vary as a cell undergoes charge or discharge processes. In certain embodiments, provided composites comprise electroactive sulfur in an oxidized form. In some embodiments, electroactive sulfur comprises elemental sulfur, e.g. S₈, or any other sulfur allotrope. In certain embodiments, electroactive sulfur is present as sulfur-containing organic molecules, or sulfur-containing polymers. In certain embodiments, electroactive sulfur is present as metal sulfides, for example, in the form of transition metal sulfides or alkali metal sulfides. In certain embodiments, electroactive sulfur is alloyed with other materials, for example, with selenium, tellurium, phosphorous, or silicon. In certain embodiments, electroactive sulfur is a mixture or composite of any two or more of the above. In certain embodiments, electroactive sulfur is selected from the group consisting of elemental sulfur (S₈), a sulfur-based compound, a sulfur-containing polymer, or combinations thereof. In certain embodiments, electroactive sulfur is selected from the group consisting of Li₂Sₙ (n≥1), organic-sulfur compounds, and carbon-sulfur polymers ((C_{y}Sₓ)ₙ where x = 2 to 50, y = 1 to 50, and n≥2). In certain embodiments, electroactive sulfur comprises elemental sulfur. In certain embodiments, electroactive sulfur comprises a sulfur-containing polymer.

### B. Cathode compositions

As mentioned above, porous composites of the present disclosure have utility in manufacture of electrochemical devices. Generally, porous composites disclosed herein would be adhered to a current collector to form cathodes for secondary sulfur batteries. In one aspect, the present disclosure provides such cathodes. Typically, provided porous composites will comprise one or more additives such as electrically conductive particles, binders, and other functional additives typically found in battery cathode mixtures. Generally, provided porous composites include plentiful conductive particles to increase electrical conductivity of a cathode and provide a low resistance pathway for electrons to access such manufactured cathode. In various embodiments, other additives are included in the porous composite to alter or otherwise enhance a cathode produced according to the principles described herein. Generally, provided cathodes will provide a high percentage of porous composite relative to other cathode components (e.g. current collector, connecting tabs, etc).

In certain embodiments, porous composites of the present disclosure contain conductive materials and a binder. In certain embodiments, a conductive material comprises an electrically conductive material that facilitates movement of electrons within a composite. For example, in certain embodiments, a conductive material is selected from the group consisting of carbon-based materials, graphite-based materials, conductive polymers, metals, semiconductors, metal oxides, metal sulfides, and combinations thereof. In certain embodiments, a conductive material comprises a carbon-based material. In certain embodiments, a conductive material comprises a graphite-based material. For example, in certain embodiments, an electrically conductive material is selected from the group consisting of conductive carbon powders, such as carbon black, Super P^{®}, C-NERGY^{™} Super C65, Ensaco^{®} black, Ketjenblack^{®}, acetylene black, synthetic graphite such as Timrex^{®} SFG-6, Timrex^{®} SFG-15, Timrex^{®} SFG-44, Timrex^{®} KS-6, Timrex^{®} KS-15, Timrex^{®} KS-44, natural flake graphite, carbon nanotubes, fullerenes, hard carbon, mesocarbon microbeads, and the like. In certain embodiments, a conductive material comprises one or more conductive polymers. For example, in certain embodiments, a conductive polymer is selected from the group consisting of polyaniline, polythiophene, polyacetylene, polypyrrole, and the like. In some embodiments, a conductive polymer is a cationic polymer. In some embodiments, a cationic polymer is a quaternary ammonium polymer. In certain embodiments, a cationic polymer is selected from the group consisting of a polydiallyldimethylammonium salt, a poly[(3-chloro-2-hydroxypropyl)methacryloxyethyldimethyl-ammonium salt, a poly(butyl acrylate-methacryloxyethyltrimethylammonium) salt, poly(1-methyl-4-vinylpyridinium) salt, a poly(1-methyl-2-vinylpyridinium) salt, and a poly(methyacryloxyethyltriethylammonium) salt. In certain embodiments, a cationic polymer is selected from polydiallyldimethylammonium chloride (polyDADMAC), polybrene, epichlorohydrin-dimethylamine (epi-DMA), poly[(3-chloro-2-hydroxypropyl)methacryloxyethyldimethyl-ammonium chloride), poly(acrylamide-methacryloxyethyltrimethylammonium bromide), poly(butyl acrylate-methacryloxyethyltrimethylammonium bromide), poly(1-methyl-4-vinylpyridinium bromide), poly(1-methyl-2-vinylpyridinium bromide), and poly(methyacryloxyethyltriethylammonium bromide). In certain embodiments, a conductive material comprises one or more metal oxides or sulfides. For example, in certain embodiments, a conductive material comprises one or more oxides or sulfides of a first-row transition metal such as titanium, vanadium, chromium, manganese, iron, cobalt, copper, zinc, or combinations thereof. For example, in certain embodiments, a conductive material comprises one or more oxides or sulfides of a second-row transition metal such as zirconium, indium, tin, antimony, or combinations thereof. In certain embodiments, a conductive material is used alone. In other embodiments, a conductive material is used as a mixture of two or more conductive materials described above.

In certain embodiments, a binder is included in the provided porous composite materials. Binders are typically polymeric materials that help adhere individual particles composing a cathode mixture into a stable composite. Representative binders include polyvinylidene fluoride, poly(vinylidene fluoride-co-hexafluoropropene) (PVDF/HFP), polytetrafluoroethylene (PTFE), Kynar Flex^{®} 2801, Kynar^{®} Powerflex LBG, Kynar^{®} HSV 900, Teflon^{®}, carboxymethylcellulose, styrene-butadiene rubber (SBR), polyethylene oxide, polypropylene oxide, polyethylene, polypropylene, polyacrylates, polyvinyl pyrrolidone, poly(methyl methacrylate), polyethyl acrylate, polytetrafluoroethylene, polyvinyl chloride, polyacrylonitrile, polycaprolactam, polyethylene terephthalate, polybutadiene, polyisoprene or polyacrylic acid, or derivatives, mixtures, or copolymers of any of these. In some embodiments, a binder is water soluble binder, such as sodium alginate, carrageenan, or carboxymethyl cellulose. Generally, binders hold active materials together and in contact with a current collector (e.g., a metal foil such as aluminum, stainless steel, or copper, or a conductive carbon sheet). In certain embodiments, a binder is selected from the group consisting of poly(vinyl acetate), polyvinyl alcohol, polyethylene oxide, polyvinyl pyrrolidone, alkylated polyethylene oxide, crosslinked polyethylene oxide, polyvinyl ether, poly(methyl methacrylate), polyvinylidene fluoride, a copolymer of polyhexafluoropropylene and polyvinylidene fluoride, polyethyl acrylate, polytetrafluoroethylene, polyvinyl chloride, polyacrylonitrile, polyvinyl pyridine, polystyrene, and derivatives, mixtures, and copolymers thereof. In some embodiments, a binder is a cationic polymer. In some embodiments, a binder is a quaternary ammonium polymer. In some embodiments, a binder is a cationic polymer as described above.

In certain embodiments, a cathode further comprises a coating layer. For example, in certain embodiments, a coating layer comprises a polymer, an organic material, an inorganic material, or a mixture thereof that is not an integral part of the porous composite or the current collector. In certain such embodiments, a polymer is selected from the group consisting of polyvinylidene fluoride, a copolymer of polyvinylidene fluoride and hexafluoropropylene, poly(vinyl acetate), poly(vinyl butyral-co-vinyl alcohol-co-vinyl acetate), poly(methylmethacrylate-co-ethyl acrylate), polyacrylonitrile, polyvinyl chloride-co-vinyl acetate, polyvinyl alcohol, poly(I-vinylpyrrolidone-co-vinyl acetate), cellulose acetate, polyvinyl pyrrolidone, polyacrylate, polymethacrylate, polyolefin, polyurethane, polyvinyl ether, acrylonitrile-butadiene rubber, styrene-butadiene rubber, acrylonitrile-butadiene styrene, a sulfonated styrene/ethylene-butylene/styrene triblock copolymer, polyethylene oxide, and derivatives, mixtures, and copolymers thereof. In some embodiments, a coating layer comprises a cationic polymer. In some embodiments, a coating layer comprises a quaternary ammonium polymer. In some embodiments, a coating layer comprises a cationic polymer as described above. In certain such embodiments, an inorganic material comprises, for example, colloidal silica, amorphous silica, surface-treated silica, colloidal alumina, amorphous alumina, tin oxide, titanium oxide, titanium sulfide (TiS₂), vanadium oxide, zirconium oxide (ZrO₂), iron oxide, iron sulfide (FeS), iron titanate (FeTiO₃), barium titanate (BaTiO₃), and combinations thereof. In certain embodiments, an organic material comprises conductive carbon.

Suitable materials for use in cathode mixtures are disclosed in Cathode Materials for Lithium Sulfur Batteries: Design, Synthesis, and Electrochemical Performance, Lianfeng, et al., Interchopen.com, Published June 1st 2016, and The strategies of advanced cathode composites for lithium-sulfur batteries, Zhou et al., SCIENCE CHINA Technological Sciences, Volume 60, Issue 2: 175-185(2017).

### C. Anode

In certain embodiments, a secondary sulfur battery comprises a lithium anode. Any lithium anode suitable for use in lithium-sulfur cells may be used. In certain embodiments, an anode of a secondary sulfur battery comprises a negative active material selected from materials in which lithium intercalation reversibly occurs, materials that react with lithium ions to form a lithium-containing compound, metallic lithium, lithium alloys, and combinations thereof. In certain embodiments, an anode comprises metallic lithium. In certain embodiments, lithium-containing anodic compositions comprise carbon-based compounds. In certain embodiments, a carbon-based compound is selected from the group consisting of crystalline carbon, amorphous carbon, graphite, and mixtures thereof. In certain embodiments, a material that reacts with lithium ions to form a lithium-containing compound is selected from the group consisting of tin oxide (SnO₂), titanium nitrate, and silicon. In certain embodiments, a lithium alloy comprises an alloy of lithium with another alkali metal (e.g. sodium, potassium, rubidium or cesium). In certain embodiments, a lithium alloy comprises an alloy of lithium with a transition metal. In certain embodiments, lithium alloys include alloys of lithium and a metal selected from the group consisting of Na, K, Rb, Cs, Fr, Be, Mg, Ca, Sr, Ba, Ra, Al, Sn, In, Zn, Sm, La, and combinations thereof. In certain embodiments, a lithium alloy comprises an alloy of lithium with indium. In certain embodiments, a lithium alloy comprises an alloy of lithium with aluminum. In certain embodiments, a lithium alloy comprises an alloy of lithium with zinc. In certain embodiments, an anode comprises a lithium-silicon alloy. Examples of suitable lithium-silicon alloys include: Li₁₅Si₄, Li₁₂Si₇, Li₇Si₃, Li₁₃Si₄, and Li₂₁Si₅/Li₂₂Si₅. In certain embodiments, a lithium metal or lithium alloy is present as a composite with another material. In certain embodiments, such composites include materials such as graphite, graphene, metal sulfides or oxides, or conductive polymers.

In some embodiments, an anode is protected against redox shuttling reactions and hazardous runaway reactions by any of the methodologies reported in the art, for example, by creating a protective layer on a surface of an anode by chemical passivation or by deposition or polymerization. For example, in certain embodiments, an anode comprises an inorganic protective layer, an organic protective layer, or a mixture thereof, on a surface of lithium metal. In certain embodiments, an inorganic protective layer comprises Mg, Al, B, Sn, Pb, Cd, Si, In, Ga, lithium silicate, lithium borate, lithium phosphate, lithium phosphoronitride, lithium silicosulfide, lithium borosulfide, lithium aluminosulfide, lithium phosphosulfide, lithium fluoride or combinations thereof. In certain embodiments, an organic protective layer includes a conductive monomer, oligomer, or polymer. In certain embodiments, such polymer is selected from poly(*p-*phenylene), polyacetylene, poly(*p*-phenylene vinylene), polyaniline, polypyrrole, polythiophene, poly(2,5-ethylene vinylene), acetylene, poly(perinaphthalene), polyacene, and poly(naphthalene-2,6-di-y1), or combinations thereof.

Moreover, in certain embodiments, inactive sulfur material, generated from an electroactive sulfur material of a cathode, during charging and discharging of a secondary sulfur battery, attaches to an anode surface. The term "inactive sulfur", as used herein, refers to sulfur that has no activity upon repeated electrochemical and chemical reactions, such that it cannot participate in an electrochemical reaction of a cathode. In certain embodiments, inactive sulfur on an anode surface acts as a protective layer on such electrode. In certain embodiments, inactive sulfur is lithium sulfide

It is further contemplated that the present disclosure can be adapted for use in sodium-sulfur batteries. Such sodium-sulfur batteries comprise a sodium-based anode, and are encompassed within the scope of the present disclosure.

### D. Preparation of Electrodes

There are a variety of methods for manufacturing electrodes for use in a secondary sulfur battery. One process, such as a "wet process," involves adding the solid cathode materials to a liquid to prepare a slurry composition. These slurries are typically in the form of a viscous liquid that is formulated to facilitate a downstream coating operation. A thorough mixing of a slurry can be important for coating and drying operations, which affect performance and quality of an electrode. Suitable mixing devices include ball mills, magnetic stirrers, sonication, planetary mixers, high speed mixers, homogenizers, universal type mixers, and static mixers. A liquid used to make a slurry can be one that homogeneously disperses an active material, a binder, a conducting material, and any additives, and that is easily evaporated. Suitable slurry liquids include, for example, N-methylpyrrolidone, acetonitrile, methanol, ethanol, propanol, butanol, tetrahydrofuran, water, isopropyl alcohol, dimethylpyrrolidone, propylene carbonate, gamma butyrolactone and the like.

In some embodiments, a prepared composition is coated on a current collector and dried to form an electrode. Specifically, a slurry is used to coat an electrical conductor to form an electrode by evenly spreading a slurry on to a conductor, which is then, in certain embodiments, optionally roll-pressed (e.g. calendared) and heated as is known in the art. Generally, a matrix of an active material and conductive material are held together and on a conductor by a binder. In certain embodiments, a matrix comprises a polymer binder, such as polyvinylidene fluoride (PVDF), poly(vinylidene fluoride-co-hexafluoropropene) (PVDF/HFP), polytetrafluoroethylene (PTFE), Kynar Flex^{®} 2801, Kynar^{®} Powerflex LBG, Kynar^{®} HSV 900, Teflon^{®}, styrene butadiene rubber (SBR), polyethylene oxide (PEO), or polytetrafluoroethylene (PTFE). In certain embodiments, additional carbon particles, carbon nanofibers, carbon nanotubes, are dispersed in a matrix to improve electrical conductivity. Alternatively or additionally, in certain embodiments, lithium salts are dispersed in a matrix to improve lithium conductivity.

In certain embodiments, a current collector is selected from the group consisting of: aluminum foil, copper foil, nickel foil, stainless steel foil, titanium foil, zirconium foil, molybdenum foil, nickel foam, copper foam, carbon paper or carbon fiber sheets, polymer substrates coated with conductive metal, and/or combinations thereof.

PCT Publication Nos. WO2015/003184, WO2014/074150, and WO2013/040067 describe various methods of fabricating electrodes and electrochemical cells.

### E. Separator

In certain embodiments, a secondary sulfur battery comprises a separator, which divides the anode and cathode and prevents direct electron conduction between them. In certain embodiments, the separator has a high lithium ion permeability. In certain embodiments, a separator is relatively less permeable to polysulfide ions dissolved in electrolyte. In certain such embodiments, a separator as a whole inhibits or restricts passage of electrolyte-soluble sulfides between anodic and cathodic portions of a battery . In certain embodiments, a separator of impermeable material is configured to allow lithium ion transport between anode and cathode of a battery during charging and discharging of a cell. In some such embodiments, a separator is porous. One or more electrolyte-permeable channels bypassing, or penetrating through apertures in, an impermeable face of a separator can be provided to allow sufficient lithium ion flux between anodic and cathodic portions of a battery.

It will be appreciated by a person skilled in the art that optimal dimensions of a separator must balance competing imperatives: maximum impedance to polysulfide migration while allowing sufficient lithium ion flux. Aside from this consideration, shape and orientation of a separator is not particularly limited, and depends in part on battery configuration. For example, in some embodiments, a separator is substantially circular in a coin-type cell, and substantially rectangular in a pouch-type cell. In some embodiments, a separator is substantially flat. However, it is not excluded that curved or other non-planar configurations may be used.

A separator may be of any suitable thickness. In order to maximize energy density of a battery, it is generally preferred that a separator is as thin and light as possible. However, a separator should be thick enough to provide sufficient mechanical robustness and to ensure suitable electrical separation of the electrodes. In certain embodiments, a separator has a thickness of from about 1 µm to about 200 µm, preferably from about 5 µm to about 100 µm, more preferably from about 10 µm to about 30 µm.

### F. Electrolyte

In certain embodiments, a secondary sulfur battery comprises an electrolyte comprising an electrolytic salt. Examples of electrolytic salts include, for example, lithium trifluoromethane sulfonimide, lithium triflate, lithium perchlorate, LiPF₆, LiBF₄, tetraalkylammonium salts (e.g. tetrabutylammonium tetrafluoroborate, TBABF₄), liquid state salts at room temperature (e.g. imidazolium salts, such as I-ethyl-3-methylimidazolium bis-(perfluoroethyl sulfonyl)imide, EMIBeti), and the like.

In certain embodiments, an electrolyte comprises one or more alkali metal salts. In certain embodiments, such salts comprise lithium salts, such as LiCF₃SO₃, LiClO₄, LiNO₃, LiPF₆, LiBr, LiTDI, LiFSI, and LiTFSI, or combinations thereof. In certain embodiments, an electrolyte comprises ionic liquids, such as 1-ethyl-3-methylimidzaolium-TFSI, N-butyl-N-methyl-piperidinium-TFSI, N-methyl-n-butyl pyrrolidinium-TFSI, and N-methyl-N-propylpiperidinium-TFSI, or combinations thereof. In certain embodiments, an electrolyte comprises superionic conductors, such as sulfides, oxides, and phosphates, for example, phosphorous pentasulfide, or combinations thereof.

In certain embodiments, an electrolyte is a liquid. For example, in certain embodiments, an electrolyte comprises an organic solvent. In certain embodiments, an electrolyte comprises only one organic solvent. In some embodiments, an electrolyte comprises a mixture of two or more organic solvents. In certain embodiments, a mixture of organic solvents comprising one or more weak polar solvents, strong polar solvents, and lithium protecting solvents.

The term "weak polar solvent", as used herein, is defined as a solvent that is capable of dissolving elemental sulfur and has a dielectric coefficient of less than 15. A weak polar solvent is selected from aryl compounds, bicyclic ethers, and acyclic carbonate compounds. Examples of weak polar solvents include xylene, dimethoxyethane, 2-methyltetrahydrofuran, diethyl carbonate, dimethyl carbonate, toluene, dimethyl ether, diethyl ether, diglyme, tetraglyme, and the like. The term "strong polar solvent", as used herein, is defined as a solvent that is capable of dissolving lithium polysulfide and has a dielectric coefficient of more than 15. A strong polar solvent is selected from bicyclic carbonate compounds, sulfoxide compounds, lactone compounds, ketone compounds, ester compounds, sulfate compounds, and sulfite compounds. Examples of strong polar solvents include hexamethyl phosphoric triamide, γ-butyrolactone, acetonitrile, ethylene carbonate, propylene carbonate, N-methylpyrrolidone, 3-methyl-2-oxazolidone, dimethyl formamide, sulfolane, dimethyl acetamide, dimethyl sulfoxide, dimethyl sulfate, ethylene glycol diacetate, dimethyl sulfite, ethylene glycol sulfite, and the like. The term "lithium protection solvent", as used herein, is defined as a solvent that forms a good protective layer, i.e. a stable solid-electrolyte interface (SEI) layer, on a lithium surface, and which shows a cyclic efficiency of at least 50%. A lithium protection solvent is selected from saturated ether compounds, unsaturated ether compounds, and heterocyclic compounds including one or more heteroatoms selected from the group consisting of N, O, and/or S. Examples of lithium protection solvents include tetrahydrofuran, 1,3-dioxolane, 3,5-dimethylisoxazole, 2,5-dimethyl furan, furan, 2-methyl furan, 1,4-oxane, 4-methyldioxolane, and the like.

In certain embodiments, an electrolyte is a liquid (e.g., an organic solvent). In some embodiments, a liquid is selected from the group consisting of organocarbonates, ethers, sulfones, water, alcohols, fluorocarbons, or combinations of any of these. In certain embodiments, an electrolyte comprises an ethereal solvent.

In certain embodiments, an organic solvent comprises an ether. In certain embodiments, an organic solvent is selected from the group consisting of 1,3-dioxolane, dimethoxyethane, diglyme, triglyme, γ-butyrolactone, γ-valerolactone, and combinations thereof. In certain embodiments, an organic solvent comprises a mixture of 1,3-dioxolane and dimethoxyethane. In certain embodiments, an organic solvent comprises a 1:1 v/v mixture of 1,3-dioxolane and dimethoxyethane. In certain embodiments, an organic solvent is selected from the group consisting of: diglyme, triglyme, γ-butyrolactone, γ-valerolactone, and combinations thereof. In certain embodiments, an electrolyte comprises sulfolane, sulfolene, dimethyl sulfone, methyl ethyl sulfone, or a combination thereof. In some embodiments, an electrolyte comprises ethylene carbonate, propylene carbonate, dimethyl carbonate, diethyl carbonate, methylethyl carbonate, or a combination thereof.

In certain embodiments, an electrolyte is a solid. In certain embodiments, a solid electrolyte comprises a polymer. In certain embodiments, a solid electrolyte comprises a glass, a ceramic, an inorganic composite, or combinations thereof. In certain embodiments, a solid electrolyte comprises a polymer composite with a glass, a ceramic, an inorganic composite, or combinations thereof. In certain embodiments, such solid electrolytes comprise one or more liquid components as plasticizers or to form a "gel electrolyte".

### G. Secondary sulfur battery

The present invention provides secondary sulfur batteries comprising porous cathode compositions described above. For example, in certain embodiments, such batteries include a lithium-containing anode composition coupled to the provided cathode composition by a lithium conducting electrolyte. In some embodiments, such batteries also comprise additional components such as separators between the anode and cathode, anodic and cathodic current collectors, terminals by which a cell can be coupled to an external load, and packaging such as a flexible pouch or a rigid metal container. It is further contemplated that the present disclosure regarding secondary sulfur batteries can be adapted for use in sodium-sulfur batteries, and such batteries are also considered within the scope of certain embodiments of the present disclosure.

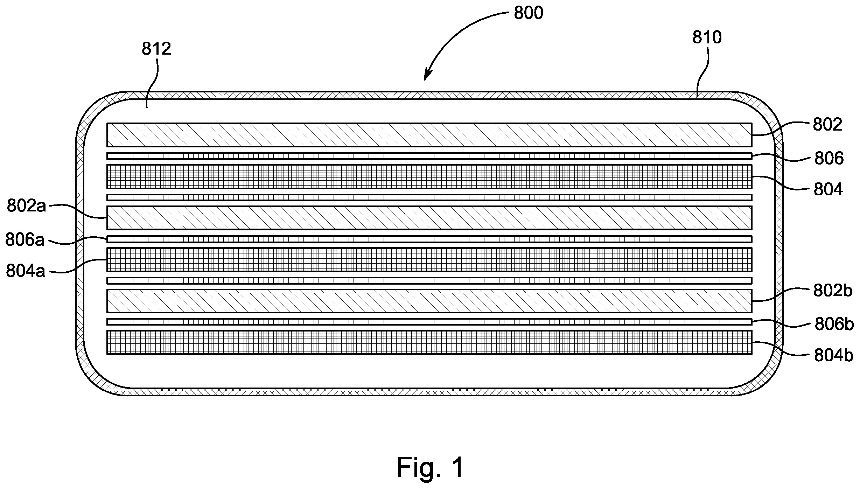

FIG. 1 illustrates a cross section of an electrochemical cell **800** in accordance with exemplary embodiments of the disclosure. Electrochemical cell **800** includes a negative electrode **802,** a positive electrode **804,** a separator **806** interposed between negative electrode **802** and positive electrode **804,** a container **810,** and a fluid electrolyte **812** in contact with negative and positive electrodes **802, 804.** Such cells optionally include additional layers of electrode and separators **802a, 802b, 804a, 804b, 806a,** and **806b.**

Negative electrode **802** (also sometimes referred to herein as an anode) comprises a negative electrode active material that can accept cations. Non-limiting examples of negative electrode active materials for lithium-based electrochemical cells include Li metal, Li alloys such as those of Si, Sn, Bi, In, and/or Al alloys, Li₄Ti₅O₁₂, hard carbon, graphitic carbon, metal chalcogenides, and/or amorphous carbon. In accordance with some embodiments of the disclosure, most (e.g., greater than 90 wt %) of an anode active material can be initially included in a discharged positive electrode **804** (also sometimes referred to herein as a cathode) when electrochemical cell **800** is initially made, so that an electrode active material forms part of first electrode **802** during a first charge of electrochemical cell **800.**

A technique for depositing electroactive material on a portion of negative electrode **802** is described in U.S. Patent Publication Nos. 2016/0172660 and 2016/0172661, in the name of Fischer et al. , to the extent such contents do not conflict with the present disclosure.

Positive electrode **804** (also referred to herein as cathode) comprises a cathode composition as described herein. In certain embodiments, a positive electrode comprises a porous composite as described herein. In certain embodiments, a porous cathode composite comprises about 30 to about 70 wt% electroactive sulfur. In certain embodiments, a cathode comprises at least about 70% of total sulfur present in an electrochemical cell. In certain embodiments, a cathode comprises at least about 80% of total sulfur present in an electrochemical cell. In certain embodiments, a cathode comprises at least about 90% of total sulfur present in an electrochemical cell. In certain embodiments, a cathode comprises at least about 95% of total sulfur present in an electrochemical cell. In certain embodiments, a cathode comprises at least about 99% of total sulfur present in an electrochemical cell. In certain embodiments, a cathode comprises essentially all of the total sulfur present in an electrochemical cell.

Negative electrode **802** and positive electrode **804** can further include one or more electrically conductive additives as described herein. In accordance with some embodiments of the disclosure, negative electrode **802** and/or positive electrode **804** further include one or more polymer binders as described below.

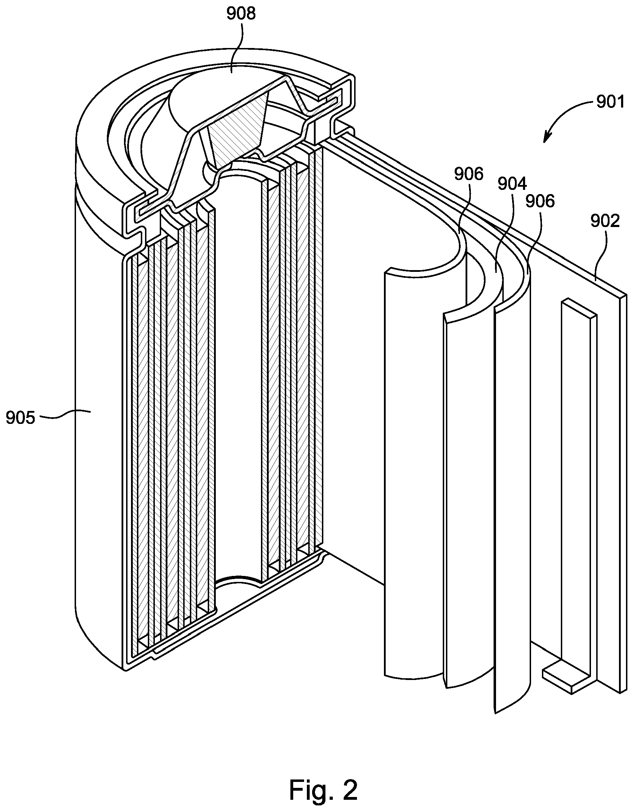

FIG. 2 illustrates an example of a battery according to various embodiments described below. A cylindrical battery is shown here for illustration purposes, but other types of arrangements, including prismatic or pouch (laminate-type) batteries, may also be used as desired. Example Li battery **901** includes a negative anode **902,** a positive cathode **904,** a separator **906** interposed between the anode **902** and the cathode **904,** an electrolyte (not shown) impregnating the separator **906,** a battery case **905,** and a sealing member **908** sealing the battery case **905.** It will be appreciated that example battery **901** may simultaneously embody multiple aspects of the present disclosure in various designs.

A secondary sulfur battery of the present disclosure comprises a lithium anode, a porous sulfur-based cathode, and an electrolyte permitting lithium ion transport between anode and cathode. In certain embodiments, described herein, an anodic portion of a battery comprises an anode and a portion of electrolyte with which it is in contact. Similarly, in certain embodiments, described herein, a cathodic portion of a battery comprises a cathode and a portion of electrolyte with which it is in contact. In certain embodiments, a battery comprises a lithium ion-permeable separator, which defines a boundary between an anodic portion and a cathodic portion. In certain embodiments, a battery comprises a case, which encloses both anodic and cathodic portions. In certain embodiments, a battery case comprises an electrically conductive anodic-end cover in electrical communication with an anode, and an electrically conductive cathodic-end cover in electrical communication with a cathode to facilitate charging and discharging via an external circuit.

In certain embodiments, a secondary sulfur battery of the present disclosure is defined in terms of its ratio of electrolyte to electroactive sulfur. Electrolyte volume and the ratio (vol/wt) of electrolyte to sulfur in a cathode correlate to energy density of a sulfur battery. Electrolyte may be distributed among different volumes within a cell, for example electrolyte may be contained in porosity of the cathode, in the separator, and in contact with the anode or within an anodic solid electrolyte interphase. Electrolyte may also be contained in other spaces within a battery where it is not in direct contact with the anodic or cathodic active materials--for example electrolyte may be stranded in an annular volume at the edges of a coin cell. In certain embodiments, the present invention provides batteries where all or most of the electrolyte is contained within the cathode. Preferably, substantially all of the electrolyte is contained within the cathode and only a minimal amount of electrolyte that is necessary to wet the separator and the anode surface or SEI is outside of the cathode. Electrolyte contained within the cathode is referred to as "contained electrolyte" and its volume V*_{CE}* can be estimated as theoretical pore volume, or porosity multiplied by the geometric volume of a cathode film: ${V}_{CE} = P% \times Area \times {thickness}_{cathode}$

In certain embodiments, a provided secondary sulfur battery is characterized in that at least 50% of the total electrolyte inventory (V*ₜₒₜ*) is contained in the cathode (e.g. V*_{CE}*/V*ₜₒₜ* >0.5). In certain embodiments, a provided secondary sulfur battery is characterized in that at least 50% of the total electrolyte inventory (V*ₜₒₜ*) is contained in the cathode (e.g. *V_{CE}*/V*ₜₒₜ* >0.8). In certain embodiments, a secondary sulfur battery has at least 60%, at least 65%, or at least 70% of the electrolyte contained in the cathode porosity. In certain embodiments, a secondary sulfur battery has at least 80%, at least 85%, or at least 90%, of the electrolyte contained in the cathode porosity. In certain embodiments, a secondary sulfur battery has at least 92%, at least 94%, at least 95%, at least 96%, or at least 97% of the electrolyte contained in the cathode.

The ratio of total electrolyte-to-sulfur (E/S) is another parameter that influences the energy density of a battery. The E/S ratio is calculated based on the total volume of electrolyte V*ₜₒₜ* and the mass of electroactive sulfur (m*_{sulfur}*): $\frac{E}{S} = \frac{{V}_{tot}}{{m}_{sulfur}}$

In certain embodiments, a secondary sulfur battery has an electrolyte-to-sulfur ratio equal to or less than about 6 microliters of electrolyte per milligram of electroactive sulfur. In certain embodiments, a secondary sulfur battery has an electrolyte-to-sulfur ratio equal to or less than about 5 microliters of electrolyte per milligram of electroactive sulfur. In certain embodiments, a secondary sulfur battery has an electrolyte-to-sulfur ratio equal to or less than about 4.5 microliters of electrolyte per milligram of electroactive sulfur. In certain embodiments, a secondary sulfur battery has an electrolyte-to-sulfur ratio equal to or less than about 3.5 microliters of electrolyte per milligram of electroactive sulfur or less than about 3.0 microliters of electrolyte per milligram of electroactive sulfur. In certain embodiments, a secondary sulfur battery has an electrolyte-to-sulfur ratio equal to or less than about 3.5 microliters of electrolyte per milligram of electroactive sulfur. In certain embodiments, a secondary sulfur battery has an electrolyte-to-sulfur ratio equal to or less than about 3 microliters of electrolyte per milligram of electroactive sulfur. In certain embodiments, a secondary sulfur battery has an electrolyte-to-sulfur ratio between about 1.8 and about 3.5 µL/mg S. In certain embodiments, a secondary sulfur battery has an electrolyte-to-sulfur ratio between about 1.8 and about 2.5 µL/mg S.

In certain embodiments, a provided secondary sulfur battery comprises a porous cathode composite containing about 30 to about 65 wt% electroactive sulfur, and is characterized in that:
a ratio of electrolyte to sulfur is equal to or less than about 3.5 µL/mg S;
a cathode has an areal loading of between about 6 mg and about 10 mg of cathode composite per square centimeter of cathode; and
a cathode composite has a porosity of at least about 50%.

In certain embodiments, a provided secondary sulfur battery comprises a porous cathode composite containing about 30 to about 60 wt% electroactive sulfur, and is characterized in that:
a ratio of electrolyte to sulfur is equal to or less than about 3 µL/mg S;
a cathode has an areal loading of between about 6 mg and about 10 mg of cathode composite per square centimeter of cathode; and
a cathode composite has a porosity of at least about 50%.

In certain embodiments, a provided secondary sulfur battery comprises a porous cathode composite containing about 30 to about 65 wt% electroactive sulfur, and is characterized in that:
a ratio of electrolyte to sulfur is equal to or less than about 3.5 µL/mg S;
a cathode has an areal loading of between about 6 mg and about 10 mg of cathode composite per square centimeter of cathode; and
a cathode composite has a thickness between about 75 and about 165 µm.

In certain embodiments, a provided secondary sulfur battery comprises a porous cathode composite containing 30 to 60 wt% electroactive sulfur, and is characterized in that:
a ratio of electrolyte to sulfur is equal to or less than about 3 µL/mg S;
a cathode has an areal loading of between about 6 mg and about 10 mg of cathode composite per square centimeter of cathode; and
a cathode composite has a thickness between about 80 and about 150 µm.

In certain embodiments, provided batteries are characterized in that a cathode composition contains more than half of the total electrolyte in a battery. In certain embodiments, a volume of electrolyte contained in the pores of a provided cathode composition represents more than about 60%, more than about 65%, more than about 70%, more than about 75%, or more than about 80% of the total electrolyte in a battery. In certain embodiments, a volume of electrolyte contained in pores of a provided cathode composition represents more than about 82%, more than about 84%, more than about 86%, more than about 87.5%, or more than about 90% of the total electrolyte in a battery. In certain embodiments, a volume of electrolyte contained in pores of a provided cathode composition represents more than about 91%, more than about 92%, more than about 93%, more than about 94%, or more than about 95% of the total electrolyte in a battery.

### V. EXAMPLES

The following examples embody certain methods of the present disclosure and demonstrate fabrication of porous cathode composites, and secondary sulfur batteries comprising the same, according to certain embodiments described herein. Moreover, the following examples are included to demonstrate principles of disclosed compositions and methods and are not intended as limiting.

### Example 1: Measurement and Calculation of Porous Cathode Composite Characteristics

### Porosity

Porosity of a composite cathode film is defined as: $P% = \left(1-\frac{{ρ}_{bulk}}{{ρ}_{theortical}}\right) ⋅ 100 %$ where ρ_{bulk} is the mass of a cathode divided by its geometric volume (thickness × area), and ρ_{theoretical} is the sum of the weighted theoretical (or atomic) densities of each component in a composite electrode.

An exemplary porous cathode composite is formulated with 75 wt% active material, where the active material is 80% sulfur and 20% conductive polymer (polyaniline, PAni) by weight, 14 wt% conductive material (carbon black), and 11 wt% binder (polyvinylidine fluoride, PVDF). Particle densities for each of the components are: p _{sulfur}=2.0 g/cm³, p _{carbon black}=1.60 g/cm³, ρ _{pvdf}=1.760 g/cm³, ρ ₚₐₙᵢ=1.360 g/cm³. The weighted density of the ρ_{theoretical} is determined according to: ${ρ}_{theoretical} = .75 \times \left[\left(.80\times 2.0\right)+\left(.20\times 1.36\right)\right] + \left[.14\times 1.6\right] + \left[.11\times 1.76\right] = 1.822$

15 µm thick aluminum foil is coated with a porous cathode composite, then dried and punched into a round disk with a diameter of 1.27 cm (0.5 in) having a measured thickness of 117 µm and a mass of 13.4 mg. Accounting for the mass and thickness of the aluminum foil substrate (~5.4 mg and 15 µm, respectively) the bulk or geometric density is determined according to: ${ρ}_{bulk} = \frac{\left(13.4-5.4 mg\right) ⋅ 1 g / 1 , 000 mg}{1.267 {cm}^{2} ⋅ \left(117-15μm\right) ⋅ 1 cm / 10 , 000 μm} = 0.619 g / {cm}^{3}$

From the values for ρ_{particle} and ρ_{bulk}, the porosity of the cathode film is determined according to: $P% = \left(1-\frac{. 619}{1.822}\right) ⋅ 100 % = 66 %$

### Sulfur-Loading

Potential storage capacity of a cathode composite is correlated to sulfur content, which is quantified via two metrics: sulfur mass fraction (%Swt) and area specific sulfur loading (S*ₐᵣₑₐ*). Sulfur mass fraction of a cathode film is sulfur mass divided by total composite cathode film mass. For the exemplary composite of this example, %Swt is determined according to: $% Swt = .75 ∗ .8 ∗ \frac{\left(13.4-5.4\right) mg}{\left(13.4-5.4\right) mg} ∗ 100 % = 60 %$ Area specific sulfur loading is then evaluated as the product of sulfur mass fraction and cathode film mass, divided by punched cathode disk area. $Sulfur Loading \left({S}_{area}\right) = \frac{\left(13.4 mg-5.4 mg\right) \times \frac{1 g}{1 , 000 mg}}{1.267 {cm}^{2}} ⋅ 60 % Swt = 3.79 mgS / {cm}^{2}$

### Electrolyte-Sulfur Ratio

Electrolyte volume and ratio (vol/wt) of electrolyte to sulfur in a cathode are also found to correlate to performance of a sulfur composite cathode. In measurement of these properties, the volume of electrolyte added to the coin cell (V*tot*) is controlled by adding a known quantity during cell construction (0.011 cm³). The fraction of the added electrolyte that is contained within the cathode (V*_{CE}*) can be estimated as follows: ${V}_{CE} = P% \times Area \times {thickness}_{cathode}$ ${V}_{CE} = 66 % \times 1.267 {cm}^{2} \times \left(117μm-15 μm\right) \times \frac{1 cm}{10 , 000 μm} = 0.0085 {cm}^{3}$

The percentage of the total electrolyte inventory contained within the cathode is therefore V*_{CE}*/V*ₜₒₜ* or 0.085/0.011 = 77.3%.

The electrolyte-to-sulfur (E/S) ratio (vol/wt) for this exemplary embodiment is determined according to: $\frac{E}{S} = \frac{{V}_{tot}}{{m}_{sulfur}} = \frac{0.0011 {cm}^{3}}{0.0048 gS} = 2.3 μL / mg S$

The porous composite described in this example is characterized in that the composite film has an areal mass of 6.3 mg/cm² with a mass sulfur fraction of 60%, a porosity of 65%, and an E/S ratio of 2.3 µL/mg S.

### Example 2: Characteristics of Exemplary Porous Cathode Composites

Exemplary composite films are prepared at total cathode solid loadings ranging from about 4.5 mg to 7 mg S/cm² with corresponding cathode thicknesses in of a range between 85 µm to 135 µm (including the cathode film and the 15 µm Al-substrate), according to parameters presented in Tables 1 to 4. The corresponding E/S ratio with respect to the electrolyte contained in the cathode (V_{CE}/mg S) is shown for each cathode.

**Table 1. Characteristics of a porous cathode with loading (total solids) of 4.72 mg/cm²**

| **Composite #** | **% Porosity** | **Cathode Thickness(µm)** | **E/S (V*_{CE}*/mg S)** |
|---|---|---|---|
| %S-cathode: 40%, ρ_{theoretical} 1.382, mg S/cm² 1.894 | | | |
| 1 | 50 | 85.033 | 1.809 |
| 2 | 55 | 92.647 | 2.211 |
| 3 | 60 | 102.166 | 2.713 |
| 4 | 65 | 114.404 | 3.360 |

| %S-cathode: 45%, ρ_{theoretical} 1.436, mg S/cm² 2.131 | | | |
|---|---|---|---|
| 5 | 55 | 89.784 | 1.891 |
| 6 | 60 | 98.944 | 2.321 |
| 7 | 65 | 110.722 | 2.874 |

| %S-cathode: 50%, ρ_{theoretical} 1.478, mg S/cm² 2.368 | | | |
|---|---|---|---|
| 8 | 60 | 96.601 | 2.030 |
| 9 | 65 | 108.044 | 2.513 |

| %S-cathode: 55%, ρ_{theoretical} 1.531, mg S/cm² 2.605 | | | |
|---|---|---|---|
| 10 | 65 | 104.875 | 2.206 |

| %S-cathode: 60%, ρ_{theoretical} 1.57, mg S/cm² 2.841 | | | |
|---|---|---|---|
| 11 | 65 | 102.680 | 1.971 |

**Table 2. Characteristics of a porous cathode with loading (total solids) of 5.51 mg/cm²**

| **Composite #** | **% Porosity** | **Cathode Thickness(µm)** | **E/S (V*_{CE}*/mg S)** |
|---|---|---|---|
| %S-cathode: 40%, ρ_{theoretical} 1.382, mg S/cm² 1.894 | | | |
| 12 | 55 | 105.338 | 2.211 |
| 13 | 60 | 116.443 | 2.713 |
| 14 | 65 | 130.721 | 3.360 |

| %S-cathode: 45%, ρ_{theoretical} 1.436, mg S/cm² 2.486 | | | |
|---|---|---|---|
| 15 | 55 | 101.998 | 1.891 |
| 16 | 60 | 112.685 | 2.321 |
| 17 | 65 | 126.426 | 2.874 |

| %S-cathode: 50%, ρ_{theoretical} 1.478, mg S/cm² 2.762 | | | |
|---|---|---|---|
| 18 | 60 | 109.952 | 2.030 |
| 19 | 65 | 123.302 | 2.513 |

| %S-cathode: 55%, ρ_{theoretical} 1.531, mg S/cm² 3.039 | | | |
|---|---|---|---|
| 20 | 65 | 119.605 | 2.206 |

| %S-cathode: 60%, ρ_{theoretical} 1.57, mg S/cm² 3.315 | | | |
|---|---|---|---|
| 21 | 65 | 117.043 | 1.971 |

**Table 3. Characteristics of a porous cathode with loading (total solids) of 6.30 mg/cm²**

| **Composite #** | **% Porosity** | **Cathode Thickness (µm)** | **E/S (V*_{CE}*/mg S)** |
|---|---|---|---|
| %S-cathode: 40%, ρ_{theoretical} 1.382, mg S/cm² 2.526 | | | |
| 22 | 50 | 107.877 | 1.809 |
| 23 | 55 | 118.030 | 2.211 |
| 24 | 60 | 130.721 | 2.713 |

| %S-cathode: 45%, ρ_{theoretical} 1.436, mg S/cm² 2.841 | | | |
|---|---|---|---|
| 25 | 55 | 114.212 | 1.891 |
| 26 | 60 | 126.426 | 2.321 |

| %S-cathode: 50%, ρ_{theoretical} 1.478, mg S/cm² 3.157 | | | |
|---|---|---|---|
| 27 | 60 | 123.302 | 2.030 |

| %S-cathode: 55%, ρ_{theoretical} 1.531, mg S/cm² 3.473 | | | |
|---|---|---|---|
| 28 | 65 | 134.334 | 2.206 |

| %S-cathode: 60%, ρ_{theoretical} 1.57, mg S/cm² 3.788 | | | |
|---|---|---|---|
| 29 | 65 | 131.407 | 1.971 |

| %S-cathode: 65%, ρ_{theoretical} 1.592, mgS/cm² 4.104 | | | |
|---|---|---|---|
| 30 | 65 | 129.819 | 1.795 |

**Table 4. Characteristics of a porous cathode with loading (total solids) of 7.09 mg/cm²**

| **Composite #** | **% Porosity** | **Cathode Thickness (µm)** | **E/S (V*_{CE}*/mg S)** |
|---|---|---|---|
| %S-cathode: 40%, ρ_{theoretical} 1.382, mgS/cm² 2.841 | | | |
| 31 | 50 | 119.299 | 1.809 |
| 32 | 55 | 130.721 | 2.211 |

| %S-cathode: 45%, ρ_{theoretical} 1.436, mgS/cm² 3.197 | | | |
|---|---|---|---|
| 33 | 55 | 126.426 | 1.891 |

### Example 3: Electrochemical Characteristics of Porous Cathode Materials

To evaluate the effect of porous cathodes of the present disclosure on the performance of lithium-sulfur secondary batteries, coin cells can be assembled. A cathode material can be prepared as described in Example 2. For example, a mixture of an active material (e.g., 75 wt% of active material comprising a mixture of ~80 wt% elemental sulfur and ~20 wt% polyaniline), conductive carbon additive (e.g., 14 wt% C65^{®}), and binder (e.g., 11 wt% PVDF) can be prepared. These components are combined in a minimal amount of solvent (e.g., NMP) and mixed to form a homogenous slurry. The resulting slurry is applied to carbon coated Al foil, and dried overnight prior to use. Disks are punched from the cathode film (e.g., diameters of 1.27 cm). The final sulfur loading on each cathode is as described in Example 2.
CR2032 coin cells may be assembled using cathode punches in combination with the following components:
Anode, e.g., a 0.2 mm thick Li-metal disc with a 9/16" diameter
Separator, e.g., Celgard-0325

### Electrolyte:

Electrolyte (e.g., 1 M LiTFSI and 0.2 M LiNO₃ in a 1:1 mixture of DME:DOL by volume) is added to each coin cell in a sufficient amount to provide cells with the desired E:S ratios. For example, for an E:S of ~3, 13 µL of electrolyte may be used for each coin cell.

Electrochemical testing may be conducted at room temperature using a Maccor 4000 battery tester. The cycling protocol may include the following steps:
1. An initial rest period of 3 hours
2. An initial discharge at a rate of C/20 - labeled cycle 0
3. A charge/discharge cycle at a rate of C/20 - labeled cycle 1
4. A charge/discharge cycle at a rate of C/10 - labeled cycle 2
5. 9 charge/discharge cycles at a rate of C/3
6. A charge/discharge cycle at a rate of C/10
7. 30 repeats of steps 4 & 5 (300 total cycles)

A 10 minute rest period may be applied after the conclusion of each charge & discharge cycle.
A suitable upper voltage cutoff bound is 2.8 V vs. Li⁺/Li
A suitable lower voltage cutoff bound is 1.7 V vs. Li⁺/Li

The discharge capacity of an electrochemical cell is measured using the cycling protocol described above.

## Claims

1. A secondary sulfur battery comprising: a cathode comprising a porous cathode composite, the composite containing between about 30 and about 70 weight percent electroactive sulfur; and an electrolyte in contact with the porous cathode composition;
**characterized in that**:
the battery has a ratio of electrolyte to electroactive sulfur equal to or less than about 3.5 microliters of electrolyte per milligram of electroactive sulfur;
the cathode comprises between about 6 milligrams and about 10 milligrams of porous cathode composite per square centimeter; and
the cathode composite has a thickness between about 75 and about 170 µm.

2. The secondary sulfur battery of claim 1, **characterized in that** the porous cathode composite has a porosity value (P%) greater than about 40, wherein P% is determined by the formula: $P% = \left(1-\frac{{ρ}_{bulk}}{{ρ}_{theortical}}\right) ⋅ 100 %$ where ρ_{bulk} represents mass of the cathode composite divided by its geometric volume (thickness × area), and ρ_{theoretical} represents a weighted sum of the theoretical (or atomic) densities of each component in the cathode composite.

3. The secondary sulfur battery of claim 2, **characterized in that** it has a value P% of greater than about 45; optionally:
**characterized in that** it has a value P% greater than about 50, greater than about 55, greater than about 60, greater than about 65, greater than about 70, or greater than about 75; or:
wherein the P% is between about 40 and about 80, between about 40 and about 70, between about 50 and about 70, between about 60 and about 80, between about 60 and about 70, between about 65 and about 75, or between about 70 and about 80.

4. The secondary sulfur battery of any one of claims 1 to 3, **characterized in that** it has a value ρ_{bulk} between about 0.45 and about 0.85 g/cm³; optionally:
wherein the value of ρ_{bulk} is between about 0.45 and about 0.65 g/cm³, between about 0.50 and about 0.70 g/cm³, between about 0.55 and about 0.75 g/cm³, between about 0.60 and about 0.80 g/cm³, or between about 0.65 and about 0.85 g/cm³.

5. The secondary sulfur battery of any one of claims 1 to 4, **characterized in that** it has a value ρ_{theoretical} between about 1.25 and about 1.75 g/cm³; optionally:
wherein the value of ρ_{theoretical} is between about 1.30 and about 1.60 g/cm³, between about 1.35 and about 1.65 g/cm³, between about 1.40 and about 1.60 g/cm³, between about 1.45 and about 1.65 g/cm³, or between about 1.38 and about 1.57 g/cm³.

6. The secondary sulfur battery of any one of claims 1 to 5, **characterized in that** it has a sulfur mass fraction (%Swt) value between about 30 and about 60; optionally:
wherein the %Swt value is between about 30 and about 50, or between about 40 and about 60; or:
wherein the %Swt value is about 30, about 35, about 40, about 45, about 50, about 55, or about 60.

7. The secondary sulfur battery of any one of claims 1 to 6, **characterized in that** it has an areal sulfur loading (S*ₐᵣₑₐ*) between about 1.85 and about 4.15 mg/cm²; optionally:
wherein the S*ₐᵣₑₐ* is between about 1.85 and about 3.35 mg/cm², between about 1.85 and about 2.85 mg/cm², between about 2.50 and about 4.15 mg/cm², or between about 2.80 and about 3.20 mg/cm²; or:
wherein the S*ₐᵣₑₐ* is about 1.90 mg/cm², about 2.15 mg/cm², about 2.35 mg/cm², about 2.45 mg/cm², about 2.50 mg/cm², about 2.60 mg/cm², about 2.75 mg/cm², about 2.85 mg/cm², about 3.05 mg/cm², about 3.15 mg/cm², about 3.20 mg/cm², about 3.45 mg/cm², about 3.50 mg/cm², about 3.75 mg/cm², about 3.80 mg/cm², or about 4.10 mg/cm².

8. The secondary sulfur battery of any one of claims 1 to 7, further **characterized in that** the porous cathode composite has a porosity of at least about 60 volume percent, wherein the porosity is determined as set out in the description; optionally:
wherein the cathode composite has a porosity of at least about 65, at least about 70, at least about 72, at least about 74, at least about 76, at least about 78, or at least about 80 volume percent; or:
wherein the porous cathode composite has a porosity of at least about 81, at least about 82, at least about 83, at least about 84, or at least about 85 volume percent.

9. The secondary sulfur battery of any one of claims 1 to 8, wherein the porous cathode composite has a thickness between about 80 and about 150 µm, between about 80 and about 100 µm, between about 85 and about 125 µm, between about 90 and about 110 µm, between about 100 and about 120 µm, between about 120 and about 140 µm, or between about 125 and about 150 µm; and/or
wherein: the porous composite has a porosity between about 50% and about 60%; the porous cathode composite has a thickness between about 85 µm and about 115 µm; the porous cathode composite has a %Swt between about 40 and about 60; and the solid material composing the porous cathode composite has a ρ_{theoretical} between about 1.38 and about 1.60 g/cm³, wherein the porosity is determined as set out in the description; optionally:
wherein porous cathode composite has a %Swt of about 55, and has a thickness between about 100 and about 110 µm; or:
wherein the porous cathode composite has a %Swt of about 60, and has a thickness between about 100 and about 110 µm; or:
wherein the porous cathode composite has a %Swt of about 50, and has a thickness between about 95 and about 110 µm; or:
wherein the porous cathode composite has a %Swt of about 50, is composed of a solid having a ρ_{theoretical} between about 1.45 and about 1.50 g/cm³, and has a thickness between about 95 and about 110 µm; or:
wherein the porous cathode composite has a %Swt of about 60, is composed of a solid having a ρ_{theoretical} between about 1.55 and about 1.60 g/cm³, and has a thickness between about 100 and about 110 µm.

10. The secondary sulfur battery of any one of claims 1 to 9, wherein the cathode contains about 6 mg of cathode composite per cm² of cathode area; or:
wherein the cathode contains about 7 mg, about 8 mg, about 9 mg, or about 10 mg of cathode composite per cm² of cathode area.

11. The secondary sulfur battery of any one of claims 1 to 10, wherein:
at least a fraction of the pores of the porous cathode composite contain electrolyte, and the ratio of electrolyte contained in the pores to electroactive sulfur in the cathode composite between about 1.8 and about 3.5 µL/mg S; optionally:
wherein the ratio of contained electrolyte to electroactive sulfur is between about 1.8 and about 2.5 µL/mg S.

12. The secondary sulfur battery of any one of claims 1 to 11, wherein: the cathode composite is present at a loading of about 6 mg per square centimeter; the content of electroactive sulfur in the cathode composite is between about 40 and about 60 wt%; and the thickness of the porous cathode composite is between about 85 and about 110 µm; or:
wherein the cathode composition is present at a loading of about 7 mg per square centimeter; the content of electroactive sulfur in the cathode composite is between about 40 and about 60 wt%; and the thickness of the porous cathode composite is between about 100 and about 120 µm; or:
wherein the cathode composition is present at a loading of about 8 mg per square centimeter; the content of electroactive sulfur in the cathode composite is between about 40 and about 60 wt%; and the thickness of the porous cathode composite is between about 105 and about 140 µm; or:
wherein the cathode composite is present at a loading of about 9 mg per square centimeter; the content of electroactive sulfur in the cathode composite is between about 30 and about 45 wt%; and the thickness of the porous cathode composite is between about 120 and about 150 µm; or:
wherein at a current density of at least about 1 mA/cm², the battery has a discharge capacity of at least about 1200 mAh per gram of electroactive sulfur for at least 100 charge-discharge cycles; or:
wherein the battery has a discharge capacity of at least about 1000 mAh per gram of electroactive sulfur after 100 or more charge charge/discharge cycles at a depth of charge of at least about 80%.

13. The secondary sulfur battery of any one of claims 1 to 12, wherein the electrolyte is a liquid; or:
wherein the electrolyte comprises a solid.

14. A secondary sulfur battery comprising: a porous cathode comprising a solid composite having a thickness of between about 75 µm and about 170 µm, composed of a solid having a theoretical density of less than about 1.6 g/cm³, and having an electroactive sulfur content of less than about 5 mg/cm²; an anode comprising lithium; and an electrolyte in contact with the porous cathode; **characterized in that**:
the battery has an electrolyte-to-sulfur ratio equal to or less than about 5 microliters of electrolyte per milligram of electroactive sulfur;
the cathode comprises between about 6 mg and about 10 mg of cathode composition per square centimeter; and
the porous cathode composition has a porosity of at least about 60%, wherein the porosity is determined as set out in the description; optionally:
wherein the low-density porous cathode composition has a thickness between about 80 and about 150 µm; optionally thereto wherein the porous cathode composite has a thickness between about 80 and about 100 µm, between about 85 and about 125 µm, between about 90 and about 110 µm, between about 100 and about 120 µm, between about 120 and about 140 µm, or between about 125 and about 150 µm; or:
wherein at least about 80% of the electrolyte in the battery is contained in the pores of the low-density porous cathode composition; or:
wherein the electroactive sulfur comprises elemental sulfur; or:
wherein the electroactive sulfur comprises a sulfur containing polymer.

## Patentansprüche

1. Sekundärschwefelbatterie, umfassend: eine Kathode, die einen porösen Kathodenverbundstoff umfasst, wobei der Verbundstoff zwischen ca. 30 und ca. 70 Gewichtsprozent an elektroaktivem Schwefel enthält; und einen Elektrolyten, der mit dem porösen Kathodenverbundstoff in Kontakt steht;
**dadurch gekennzeichnet, dass**:
die Batterie ein Verhältnis von Elektrolyt zu elektroaktivem Schwefel aufweist, das gleich oder kleiner ist als ca. 3,5 Mikroliter Elektrolyt pro Milligramm an elektroaktivem Schwefel;
die Kathode zwischen ca. 6 Milligramm und ca. 10 Milligramm an porösem Kathodenverbundstoff pro Quadratzentimeter umfasst; und
der poröse Kathodenverbundstoff eine Dicke zwischen ca. 75 und ca. 170 µm aufweist.

2. Sekundärschwefelbatterie nach Anspruch 1, **dadurch gekennzeichnet, dass** der poröse Kathodenverbundstoff einen Porositätswert (P%) von mehr als ca. 40 aufweist, wobei P% durch die folgende Formel bestimmt wird: $P% = \left(1-\frac{{ρ}_{bulk}}{{ρ}_{theortical}}\right) ⋅ 100 %$ wobei ρ_{bulk} die Masse des Kathodenverbundstoffs geteilt durch sein geometrisches Volumen (Dicke × Fläche) darstellt und ρ_{theoretical} eine gewichtete Summe der theoretischen (oder atomaren) Dichten jeder Komponente im Kathodenverbundstoff darstellt.

3. Sekundärschwefelbatterie nach Anspruch 2, **dadurch gekennzeichnet, dass** sie einen Wert P% von mehr als ca. 45 aufweist; optional:
**dadurch gekennzeichnet, dass** sie einen Wert P% von mehr als ca. 50, mehr als ca. 55, mehr als ca. 60, mehr als ca. 65, mehr als ca. 70 oder mehr als ca. 75 aufweist; oder:
wobei der *P%-Wert* zwischen ca. 40 und ca. 80, zwischen ca. 40 und ca. 70, zwischen ca. 50 und ca. 70, zwischen ca. 60 und ca. 80, zwischen ca. 60 und ca. 70, zwischen ca. 65 und ca. 75 oder zwischen ca. 70 und ca. 80 liegt.

4. Sekundärschwefelbatterie nach einem der Ansprüche 1 bis 3, **dadurch gekennzeichnet, dass** diese einen Wert ρ_{bulk} zwischen ca. 0,45 und ca. 0,85 g/cm³ aufweist; optional:
wobei der Wert von ρ_{bulk} zwischen ca. 0,45 und ca. 0,65 g/cm³, zwischen ca. 0,50 und ca. 0,70 g/cm³, zwischen ca. 0,55 und ca. 0,75 g/cm³, zwischen ca. 0,60 und ca. 0,80 g/cm³ oder zwischen ca. 0,65 und ca. 0,85 g/cm³ liegt.

5. Sekundärschwefelbatterie nach einem der Ansprüche 1 bis 4, **dadurch gekennzeichnet, dass** diese einen Wert ρ_{theoretical} zwischen ca. 1,25 und ca. 1,75 g/cm³ aufweist; optional:
wobei der Wert von ρ_{theoretical} zwischen ca. 1,30 und ca. 1,60 g/cm³, zwischen ca. 1,35 und ca. 1,65 g/cm³, zwischen ca. 1,40 und ca. 1,60 g/cm³, zwischen ca. 1,45 und ca. 1,65 g/cm³ oder zwischen ca. 1,38 und ca. 1,57 g/cm³ liegt.

6. Sekundärschwefelbatterie nach einem der Ansprüche 1 bis 5, **dadurch gekennzeichnet, dass** diese einen Schwefelmassenanteil (%Swt) zwischen ca. 30 und ca. 60 aufweist; optional:
wobei der %Swt-Wert zwischen ca. 30 und ca. 50 oder zwischen ca. 40 und ca. 60 liegt; oder:
wobei der %Swt-Wert ca. 30, ca. 35, ca. 40, ca. 45, ca. 50, ca. 55 oder ca. 60 beträgt.

7. Sekundärschwefelbatterie nach einem der Ansprüche 1 bis 6, **dadurch gekennzeichnet, dass** diese eine flächenbezogene Schwefelbeladung (S*ₐᵣₑₐ*) zwischen ca. 1,85 und ca. 4,15 mg/cm² aufweist; optional:
wobei S*ₐᵣₑₐ* zwischen ca. 1,85 und ca. 3,35 mg/cm², zwischen ca. 1,85 und ca. 2,85 mg/cm², zwischen ca. 2,50 und ca. 4,15 mg/cm² oder zwischen ca. 2,80 und ca. 3,20 mg/cm² liegt; oder:
wobei die S*ₐᵣₑₐ* ca. 1,90 mg/cm², ca. 2,15 mg/cm², ca. 2,35 mg/cm², ca. 2,45 mg/cm², ca. 2,50 mg/cm², ca. 2,60 mg/cm², ca. 2,75 mg/cm², ca. 2,85 mg/cm², ca. 3,05 mg/cm², ca. 3,15 mg/cm², ca. 3,20 mg/cm², ca. 3,45 mg/cm², ca. 3,50 mg/cm², ca. 3,75 mg/cm², ca. 3,80 mg/cm² oder ca. 4,10 mg/cm² beträgt.

8. Sekundärschwefelbatterie nach einem der Ansprüche 1 bis 7, ferner **dadurch gekennzeichnet, dass** der poröse Kathodenverbundstoff eine Porosität von mindestens ca. 60 Volumenprozent aufweist, wobei die Porosität wie in der Beschreibung dargelegt bestimmt wird; optional:
wobei der Kathodenverbund eine Porosität von mindestens ca. 65, mindestens ca. 70, mindestens ca. 72, mindestens ca. 74, mindestens ca. 76, mindestens ca. 78 oder mindestens ca. 80 Volumenprozent aufweist; oder:
wobei der poröse Kathodenverbund eine Porosität von mindestens ca. 81, mindestens ca. 82, mindestens ca. 83, mindestens ca. 84 oder mindestens ca. 85 Volumenprozent aufweist.

9. Sekundärschwefelbatterie nach einem der Ansprüche 1 bis 8, wobei der poröse Kathodenverbund eine Dicke zwischen ca. 80 und ca. 150 µm, zwischen ca. 80 und ca. 100 µm, zwischen ca. 85 und ca. 125 µm, zwischen ca. 90 und ca. 110 µm, zwischen ca. 100 und ca. 120 µm, zwischen ca. 120 und ca. 140 µm oder zwischen ca. 125 und ca. 150 µm aufweist; und/oder
wobei der poröse Verbund eine Porosität zwischen ca. 50 % und ca. 60 % aufweist; der poröse Kathodenverbund eine Dicke zwischen ca. 85 µm und ca. 115 µm aufweist; der poröse Kathodenverbund hat einen %Swt-Wert zwischen ca. 40 und ca. 60 aufweist; und das feste Material, aus dem der poröse Kathodenverbund besteht, hat eine ρ_{theoretical} zwischen ca. 1,38 und ca. 1,60 g/cm³ aufweist, wobei die Porosität wie in der Beschreibung dargelegt bestimmt wird; optional:
wobei der poröse Kathodenverbundstoff einen %Swt-Wert von ca. 55 und eine Dicke zwischen ca. 100 und ca. 110 µm aufweist; oder:
wobei der poröse Kathodenverbundstoff einen %Swt-Wert von ca. 60 und eine Dicke zwischen ca. 100 und ca. 110 µm aufweist; oder:
wobei der poröse Kathodenverbundstoff einen %Swt-Wert von ca. 50 aufweist und eine Dicke zwischen ca. 95 und ca. 110 µm hat; oder:
wobei der poröse Kathodenverbundstoff einen %Swt-Wert von ca. 50 aufweist, aus einem Feststoff mit einer theoretischen Dichte zwischen ca. 1,45 und ca. 1,50 g/cm³ besteht und eine Dicke zwischen ca. 95 und ca. 110 µm aufweist; oder:
wobei der poröse Kathodenverbundstoff einen %Swt-Wert von ca. 60 aufweist, aus einem Feststoff mit einer theoretischen Dichte zwischen ca. 1,55 und ca. 1,60 g/cm³ besteht und eine Dicke zwischen ca. 100 und ca. 110 µm aufweist.

10. Sekundärschwefelbatterie nach einem der Ansprüche 1 bis 9, wobei die Kathode ca. 6 mg Kathodenverbundstoff pro cm² Kathodenfläche enthält; oder:
wobei die Kathode ca. 7 mg, ca. 8 mg, ca. 9 mg oder ca. 10 mg Kathodenverbundstoff pro cm² Kathodenfläche enthält.

11. Sekundärschwefelbatterie nach einem der Ansprüche 1 bis 10, wobei:
zumindest ein Teil der Poren des porösen Kathodenverbundmaterials Elektrolyt enthält, und das Verhältnis von in den Poren enthaltenem Elektrolyt zu elektroaktivem Schwefel im Kathodenverbundmaterial zwischen ca. 1,8 und ca. 3,5 µL/mg S liegt; optional:
wobei das Verhältnis von enthaltenem Elektrolyt zu elektroaktivem Schwefel zwischen ca. 1,8 und ca. 2,5 µL/mg S liegt.

12. Sekundärschwefelbatterie nach einem der Ansprüche 1 bis 11, wobei: der Kathodenverbundstoff in einer Beladung von ca. 6 mg pro Quadratzentimeter vorliegt; der Gehalt an elektroaktivem Schwefel im Kathodenverbundstoff zwischen ca. 40 und ca. 60 Gew.-% liegt; und die Dicke des porösen Kathodenverbundstoffs zwischen ca. 85 und ca. 110 µm liegt; oder:
wobei die Kathodenzusammensetzung in einer Beladung von ca. 7 mg pro Quadratzentimeter vorliegt; der Gehalt an elektroaktivem Schwefel im Kathodenverbundmaterial zwischen ca. 40 und ca. 60 Gew.-% liegt; und die Dicke des porösen Kathodenverbundmaterials zwischen ca. 100 und ca. 120 µm liegt; oder:
wobei die Kathodenzusammensetzung in einer Beladung von ca. 8 mg pro Quadratzentimeter vorliegt; der Gehalt an elektroaktivem Schwefel im porösen Kathodenverbundmaterial zwischen ca. 40 und ca. 60 Gew.-% liegt; und die Dicke des porösen Kathodenverbundmaterials zwischen ca. 105 und ca. 140 µm liegt; oder:
wobei der Kathodenverbundstoff in einer Beladung von ca. 9 mg pro Quadratzentimeter vorliegt; der Gehalt an elektroaktivem Schwefel im Kathodenverbundstoff zwischen ca. 30 und ca. 45 Gew.-% liegt; und die Dicke des porösen Kathodenverbundstoffs zwischen ca. 120 und ca. 150 µm liegt; oder:
wobei die Batterie bei einer Stromdichte von mindestens ca. 1 mA/cm² eine Entladekapazität von mindestens ca. 1200 mAh pro Gramm elektroaktiven Schwefels über mindestens 100 Lade-Entlade-Zyklen aufweist; oder:
wobei die Batterie nach 100 oder mehr Lade-/Entladezyklen bei einer Ladetiefe von mindestens ca. 80 % eine Entladekapazität von mindestens ca. 1000 mAh pro Gramm elektroaktiven Schwefels aufweist.

13. Sekundärschwefelbatterie nach einem der Ansprüche 1 bis 12, wobei der Elektrolyt eine Flüssigkeit ist; oder:
wobei der Elektrolyt einen Feststoff umfasst.

14. Sekundärschwefelbatterie, umfassend: eine poröse Kathode, die einen festen Verbundwerkstoff mit einer Dicke zwischen ca. 75 µm und ca. 170 µm umfasst, der aus einem Feststoff mit einer theoretischen Dichte von weniger als ca. 1,6 g/cm³ zusammengesetzt ist und einen Gehalt an elektroaktivem Schwefel von weniger als ca. 5 mg/cm² aufweist; eine Anode, die Lithium umfasst; und einen Elektrolyten, der mit der porösen Kathode in Kontakt steht; **dadurch gekennzeichnet, dass**:
die Batterie ein Elektrolyt-zu-Schwefel-Verhältnis von gleich oder weniger als ca. 5 Mikroliter Elektrolyt pro Milligramm elektroaktiven Schwefels aufweist;
die Kathode zwischen ca. 6 mg und ca. 10 mg Kathodenzusammensetzung pro Quadratzentimeter umfasst; und
die poröse Kathodenzusammensetzung eine Porosität von mindestens ca. 60 % aufweist, wobei die Porosität wie in der Beschreibung dargelegt bestimmt wird; optional:
wobei die poröse Kathodenzusammensetzung mit geringer Dichte eine Dicke zwischen ca. 80 und ca. 150 µm aufweist; optional dazu, wobei der poröse Kathodenverbund eine Dicke zwischen ca. 80 und ca. 100 µm, zwischen ca. 85 und ca. 125 µm, zwischen ca. 90 und ca. 110 µm, zwischen ca. 100 und ca. 120 µm, zwischen ca. 120 und ca. 140 µm oder zwischen ca. 125 und ca. 150 µm aufweist; oder:
wobei mindestens ca. 80 % des Elektrolyten in der Batterie in den Poren der porösen Kathodenzusammensetzung mit geringer Dichte enthalten sind; oder:
wobei der elektroaktive Schwefel elementaren Schwefel umfasst; oder:
wobei der elektroaktive Schwefel ein schwefelhaltiges Polymer umfasst.

## Revendications

1. Batterie secondaire au soufre comprenant : une cathode comprenant un composite de cathode poreux, ledit composite contenant entre environ 30 et environ 70 % en poids de soufre électroactif ; et un électrolyte en contact avec la composition de cathode poreuse ;
**caractérisée en ce que** :
la batterie présente un rapport entre l'électrolyte et le soufre électroactif inférieur ou égal à environ 3,5 microlitres d'électrolyte par milligramme de soufre électroactif ;
la cathode comprend entre environ 6 milligrammes et environ 10 milligrammes de composite de cathode poreux par centimètre carré ; et
le composite de cathode a une épaisseur comprise entre environ 75 et environ 170 µm.

2. Batterie secondaire au soufre selon la revendication 1, **caractérisée en ce que** le composite de cathode poreux présente une valeur de porosité (P%) supérieure à environ 40, où P% est déterminé par la formule : $P% = \left(1-\frac{{ρ}_{bulk}}{{ρ}_{theortical}}\right) ⋅ 100 %$ où ρ_{bulk} représente la masse du composite de cathode divisée par son volume géométrique (épaisseur × aire), et ρ_{theorical} représente une somme pondérée des densités théoriques (ou atomiques) de chaque composant du composite de cathode.

3. Batterie secondaire au soufre selon la revendication 2, **caractérisée en ce qu'**elle présente une valeur P% supérieure à environ 45 ; éventuellement :
**caractérisée en ce qu'**elle présente une valeur P% supérieure à environ 50, supérieure à environ 55, supérieure à environ 60, supérieure à environ 65, supérieure à environ 70 ou supérieure à environ 75 ; ou :
dans laquelle le *P %* est compris entre environ 40 et environ 80, entre environ 40 et environ 70, entre environ 50 et environ 70, entre environ 60 et environ 80, entre environ 60 et environ 70, entre environ 65 et environ 75, ou entre environ 70 et environ 80.

4. Batterie secondaire au soufre selon l'une quelconque des revendications 1 à 3, **caractérisée en ce qu'**elle présente une valeur de ρ_{bulk} comprise entre environ 0,45 et environ 0,85 g/cm³ ; éventuellement :
dans laquelle la valeur de ρ_{bulk} est comprise entre environ 0,45 et environ 0,65 g/cm³, entre environ 0,50 et environ 0,70 g/cm³, entre environ 0,55 et environ 0,75 g/cm³, entre environ 0,60 et environ 0,80 g/cm³, ou entre environ 0,65 et environ 0,85 g/cm³.

5. Batterie secondaire au soufre selon l'une quelconque des revendications 1 à 4, **caractérisée en ce qu'**elle présente une valeur de ρ_{theorical} comprise entre environ 1,25 et environ 1,75 g/cm³ ; éventuellement :
dans laquelle la valeur de ρ_{theorical} est comprise entre environ 1,30 et environ 1,60 g/cm³, entre environ 1,35 et environ 1,65 g/cm³, entre environ 1,40 et environ 1,60 g/cm³, entre environ 1,45 et environ 1,65 g/cm³, ou entre environ 1,38 et environ 1,57 g/cm³.

6. Batterie secondaire au soufre selon l'une quelconque des revendications 1 à 5, **caractérisée en ce qu'**elle présente une fraction massique de soufre (%Swt) comprise entre environ 30 et environ 60 ; éventuellement :
dans laquelle la valeur de %Swt est comprise entre environ 30 et environ 50, ou entre environ 40 et environ 60 ; ou :
dans laquelle la valeur de %Swt est d'environ 30, d'environ 35, d'environ 40, d'environ 45, d'environ 50, d'environ 55 ou d'environ 60.

7. Batterie secondaire au soufre selon l'une quelconque des revendications 1 à 6, **caractérisée en ce qu'**elle présente une charge surfacique en soufre (S*ₐᵣₑₐ*) comprise entre environ 1,85 et environ 4,15 mg/cm² ; éventuellement :
dans laquelle S*ₐᵣₑₐ* est comprise entre environ 1,85 et environ 3,35 mg/cm², entre environ 1,85 et environ 2,85 mg/cm², entre environ 2,50 et environ 4,15 mg/cm², ou entre environ 2,80 et environ 3,20 mg/cm² ; ou :
dans laquelle S*ₐₑᵣₐ* est d'environ 1,90 mg/cm², d'environ 2,15 mg/cm², d'environ 2,35 mg/cm², d'environ 2,45 mg/cm², d'environ 2,50 mg/cm², d'environ 2,60 mg/cm², d'environ 2,75 mg/cm², d'environ 2,85 mg/cm², environ 3,05 mg/cm², environ 3,15 mg/cm², environ 3,20 mg/cm², environ 3,45 mg/cm², environ 3,50 mg/cm², environ 3,75 mg/cm², environ 3,80 mg/cm², ou environ 4,10 mg/cm².

8. Batterie secondaire au soufre selon l'une quelconque des revendications 1 à 7, **caractérisée en outre en ce que** le composite de cathode poreux présente une porosité d'au moins environ 60 % en volume, ladite porosité étant déterminée comme indiqué dans la description ; éventuellement :
dans laquelle le composite de cathode présente une porosité d'au moins environ 65, d'au moins environ 70, d'au moins environ 72, d'au moins environ 74, d'au moins environ 76, d'au moins environ 78 ou d'au moins environ 80 pour cent en volume ; ou :
dans laquelle le composite de cathode poreux présente une porosité d'au moins environ 81, d'au moins environ 82, d'au moins environ 83, d'au moins environ 84 ou d'au moins environ 85 pour cent en volume.

9. Batterie secondaire au soufre selon l'une quelconque des revendications 1 à 8, dans laquelle le composite de cathode poreux présente une épaisseur comprise entre environ 80 et environ 150 µm, entre environ 80 et environ 100 µm, entre environ 85 et environ 125 µm, entre environ 90 et environ 110 µm, entre environ 100 et environ 120 µm, entre environ 120 et environ 140 µm, ou entre environ 125 et environ 150 µm ; et/ou
dans laquelle : le composite poreux présente une porosité comprise entre environ 50 % et environ 60 % ; le composite de cathode poreux présente une épaisseur comprise entre environ 85 µm et environ 115 µm ; le composite de cathode poreux présente une %Swt comprise entre environ 40 et environ 60 ; et le matériau solide composant le composite de cathode poreux présente une ρ_{theorical} comprise entre environ 1,38 et environ 1,60 g/cm³, la porosité étant déterminée comme indiqué dans la description ; éventuellement :
dans laquelle le composite de cathode poreux présente une %Swt d'environ 55 et une épaisseur comprise entre environ 100 et environ 110 µm ; ou :
dans laquelle le composite de cathode poreux présente une %Swt d'environ 60 et une épaisseur comprise entre environ 100 et environ 110 µm ; ou :
dans laquelle le composite de cathode poreux présente une %Swt d'environ 50 et une épaisseur comprise entre environ 95 et environ 110 µm ; ou :
dans laquelle le composite de cathode poreux présente une %Swt d'environ 50, est composé d'un solide ayant une ρ_{theorical} comprise entre environ 1,45 et environ 1,50 g/cm³, et présente une épaisseur comprise entre environ 95 et environ 110 µm ; ou :
dans laquelle le composite de cathode poreux présente une %Swt d'environ 60, est composé d'un solide ayant une ρ_{theorical} comprise entre environ 1,55 et environ 1,60 g/cm³, et présente une épaisseur comprise entre environ 100 et environ 110 µm.

10. Batterie secondaire au soufre selon l'une quelconque des revendications 1 à 9, dans laquelle la cathode contient environ 6 mg de composite de cathode par cm² de surface de cathode ; ou :
dans laquelle la cathode contient environ 7 mg, environ 8 mg, environ 9 mg ou environ 10 mg de composite de cathode par cm² de surface de cathode.

11. Batterie secondaire au soufre selon l'une quelconque des revendications 1 à 10, dans laquelle :
au moins une partie des pores du composite de cathode poreux contient de l'électrolyte, et le rapport entre l'électrolyte contenu dans les pores et le soufre électroactif dans le composite de cathode est compris entre environ 1,8 et environ 3,5 µL/mg de S ; éventuellement :
le rapport entre l'électrolyte contenu et le soufre électroactif est compris entre environ 1,8 et environ 2,5 µL/mg de S.

12. Batterie secondaire au soufre selon l'une quelconque des revendications 1 à 11, dans laquelle : le composite de cathode est présent à une charge d'environ 6 mg par centimètre carré ; la teneur en soufre électroactif dans le composite de cathode est comprise entre environ 40 et environ 60 % en poids ; et l'épaisseur du composite de cathode poreux est comprise entre environ 85 et environ 110 µm ; ou :
dans laquelle la composition de cathode est présente à une charge d'environ 7 mg par centimètre carré ; la teneur en soufre électroactif dans le composite de cathode est comprise entre environ 40 et environ 60 % en poids ; et l'épaisseur du composite de cathode poreux est comprise entre environ 100 et environ 120 µm ; ou :
dans laquelle la composition de cathode est présente à une charge d'environ 8 mg par centimètre carré ; la teneur en soufre électroactif dans le composite de cathode est comprise entre environ 40 et environ 60 % en poids ; et l'épaisseur du composite de cathode poreux est comprise entre environ 105 et environ 140 µm ; ou :
dans laquelle le composite de cathode est présent à une charge d'environ 9 mg par centimètre carré ; la teneur en soufre électroactif dans le composite de cathode est comprise entre environ 30 et environ 45 % en poids ; et l'épaisseur du composite de cathode poreux est comprise entre environ 120 et environ 150 µm ; ou :
dans laquelle, à une densité de courant d'au moins environ 1 mA/cm², la batterie présente une capacité de décharge d'au moins environ 1 200 mAh par gramme de soufre électroactif pendant au moins 100 cycles de charge-décharge ; ou :
dans laquelle la batterie présente une capacité de décharge d'au moins environ 1000 mAh par gramme de soufre électroactif après 100 cycles de charge/décharge ou plus, à une profondeur de charge d'au moins environ 80 %.

13. Batterie secondaire au soufre selon l'une quelconque des revendications 1 à 12, dans laquelle l'électrolyte est un liquide ; ou :
dans laquelle l'électrolyte comprend un solide.

14. Batterie secondaire au soufre comprenant : une cathode poreuse comprenant un composite solide d'une épaisseur comprise entre environ 75 µm et environ 170 µm, composé d'un solide ayant une densité théorique inférieure à environ 1,6 g/cm³, et ayant une teneur en soufre électroactif inférieure à environ 5 mg/cm² ; une anode comprenant du lithium ; et un électrolyte en contact avec la cathode poreuse ; **caractérisée en ce que**:
la batterie présente un rapport électrolyte/soufre inférieur ou égal à environ 5 microlitres d'électrolyte par milligramme de soufre électroactif ;
la cathode comprend entre environ 6 mg et environ 10 mg de composition de cathode par centimètre carré ; et
la composition de cathode poreuse présente une porosité d'au moins environ 60 %, ladite porosité étant déterminée comme indiqué dans la description ; éventuellement :
dans laquelle la composition de cathode poreuse à faible densité présente une épaisseur comprise entre environ 80 et environ 150 µm ; éventuellement en plus, le composite de cathode poreux présente une épaisseur comprise entre environ 80 et environ 100 µm, entre environ 85 et environ 125 µm, entre environ 90 et environ 110 µm, entre environ 100 et environ 120 µm, entre environ 120 et environ 140 µm, ou entre environ 125 et environ 150 µm ; ou :
dans laquelle au moins environ 80 % de l'électrolyte de la batterie est contenu dans les pores de la composition de cathode poreuse à faible densité ; ou :
dans laquelle le soufre électroactif comprend du soufre élémentaire ; ou :
dans laquelle le soufre électroactif comprend un polymère contenant du soufre.
